# EUROPEAN PATENT SPECIFICATION

(11) **EP 1 189 675 B1**
(45) Date of publication and mention of the grant of the patent: **14.06.2006**
(21) Application number: 00938140.1
(22) Date of filing: 02.06.2000
(51) Int. Cl.: B01D 46/24, F02M 35/024

(54) **AIR FILTER**
LUFTFILTER
FILTRE D'AIR

(30) Priority: 03.06.1999 US 325697; 01.12.1999 US 452311
(43) Date of publication of application: 27.03.2002
(73) Proprietor: DONALDSON COMPANY, INC., Minneapolis, MN 55440-1299 (US)
(72) Inventor: GILLINGHAM, Gary, R., Prior Lake, MN 55372 (US); KOEHLER, Stan, M., Eden Prairie, MN 55346 (US); KRISKO, William, J., Bloomington, MN 55437 (US); MILLER, Thomas, G., Eagan, MN 55122 (US); OLSON, Winston, E., Apple Valley, MN 55124 (US); WAHLQUIST, Fred, H., Bloomington, MN 55437 (US); FUCHS, Ervin, P., Farmington, MN 55024 (US); WILSON, Eugene, D., Prior Lake, MN 55372 (US)
(74) Representative: Eisenführ, Speiser & Partner
(86) International application number: PCT/US2000/015436
(87) International publication number: WO 2000/074818

(56) References cited:
- FR-A- 2 473 348
- US-A- 3 402 531
- US-A- 4 298 474
- US-A- 4 331 459
- US-A- 5 207 811
- US-A- 5 575 826
- US-A- 5 797 973

## Description

### Field of the Invention

The present disclosure relates to air cleaners and particularly concerns air cleaners for cleaning combustion air directed to the engine air intake of large vehicles and equipment. The disclosure concerns preferred designs of air cleaners for such use, and methods of assembly and use.

### Background of the Invention

In general, combustion air for engines needs to be filtered to prevent particulates, otherwise carried in the intake air stream, from reaching sensitive engine components. As a result, nearly every engine system involving combustion air includes an air cleaner assembly of some type positioned in the intake air stream.

Many air cleaner assemblies generally comprise a housing through which the air is directed during filtration or cleaning. In some systems, a removable and replaceable filter element, or a combination of such filter elements, is provided within the housing. In use, the air is directed through the filter element(s) as it moves through the housing. In time, the filter element(s) becomes occluded or loaded with a concomitant increase in restriction across the air cleaner. At an appropriate service point, the filter element(s) is removed and is either refurbished (cleaned) or replaced.

Certain very large and powerful equipment types generate unique problems with respect to air cleaner operation. Consider large earth movers, haul trucks, and other very large types of construction and mining equipment that have 500-2,000 horsepower (hp) (37.3-149.2 KW) engines.

Such equipment operates for extended periods in extremely dusty environments. Such equipment also has very large volume demands for combustion air. This means very large amounts of particle-laden air on an almost continuous basis is passing through the air cleaner system. Indeed, the typical environments of use, for example construction sites and mining sites, are sites characterized by relatively large amounts of air borne particulates of a variety of sizes and population distribution.

Special heavy-duty multistage filtration units have been designed for use with such equipment. One such design has been available from Dohaldson Company, Inc. of Minneapolis, Minnesota under the designation SRG Donaclone™. Such products are designed for an air flow of up to approximately 1,300 - 4,500 cubic feet per minute (cfm) (81,000-281,000 pounds water per minute (pwm)) and are available in single or dual unit designs. In general, such arrangements are multistaged. In a first stage, a precleaner is provided for removal of up to 95% of the dirt in the air stream before it reaches the filters. Such precleaners generally operate by directing the inlet air flow through a plurality of cyclonic tubes with dust separation occurring as a result of the cyclonic air flow. Cyclonic precleaners are described, for example, in U.S. Patent 5,693,109.

In the second stage, the air from the precleaner is directed into and through an air filter system, typically a filter system provided by two elements: an outer primary filter element and an internal secondary or safety element. The housings are generally configured so that, periodically, the primary filter (and if desired the secondary filter) can be removed and be refurbished or replaced.

### Summary

### I. Summary of the filter assembly and the operating method

In one aspect, an example embodiment involves a filter assembly. The filter assembly includes a housing that defines first and second chambers, a first stage air cleaner, a second stage air cleaner, and a pulse jet cleaning arrangement. The first stage air cleaner is positioned in the first chamber and includes a first filter element through which air to be filtered is directed during use. The second stage air cleaner is positioned in the second chamber and includes at least one removable and replaceable filter element through which air is directed during use. The pulse jet cleaning arrangement is constructed and arranged to selectively direct a pulse jet of air, in a reverse direction, through said first filter element.

In another aspect an apparatus includes a first V-pack filter and a lift mechanism. The first V-pack filter has a first, lower end and a second, upper end. The second, upper end includes an air flow exit aperture; a first seal arrangement, or gasket, circumscribing the air flow exit aperture and projecting outwardly from said second, upper end; and a hard stop arrangement projecting outwardly from said second, upper end. The lift mechanism includes a base structure, a movable seat secured to the base structure, and a pivotally mounted control arm. The movable seat has a first, raised orientation and a second, lowered orientation. The pivotally mounted control arm raises the movable seat to the first raised orientation and lowers the movable seat to the second, lowered orientation. The first V-pack filter and the lift mechanism are constructed and arranged such that when the lift mechanism is positioned in the first, raised orientation, the first V-pack filter is pressed against a portion of a housing in a locked position with the first seal arrangement pressed to form a seal and the hard stop limiting an extent of movement of the V-pack toward the housing. When the lift mechanism is in the second, lowered orientation, the first V-pack filter is released from the locked position.

In another aspect a method of operating an engine air intake filter assembly is discussed. The filter assembly includes a first chamber to house a first stage air cleaner, a second chamber to house a second stage air cleaner, and a pulse jet cleaning arrangement constructed and arranged to selectively direct pulses of air through the first stage air cleaner. The method includes measuring a pressure drop across the first stage air cleaner during engine operation; measuring an engine load during the engine operation; and activating a pulse valve of the pulse jet cleaning arrangement to direct a pulse of air, in a reverse direction, through the first stage air cleaner in response to the engine load being below a predetermined engine load and the pressure drop exceeding a predetermined pressure drop.

### II. Summary of the Interlocking Arrangement

In one aspect of this discussion, an example embodiment involves an apparatus. The apparatus includes a retention mechanism, a V-pack filter, and an interlocking arrangement. The retention mechanism includes a base structure and a movable seat. The movable seat is secured to the base structure and has a first, locked orientation and a second, unlocked orientation. The V-pack filter includes a frame construction having first and second frame structures. The V-pack filter also includes first and second panel sections mounted in extension between the first and second frame structures. The first panel section has first and second ends. The second panel section has third and fourth ends. The first and third ends have a first distance therebetween. The second and fourth ends have a second distance therebetween. The second distance is generally greater than the first distance thus causing a V-shape. The first and second panel sections and the second frame structure define an air flow aperture. The V-pack filter also includes a sealing arrangement that circumscribes the air flow aperture and projects outwardly from the second frame structure.

The apparatus has a first, operable orientation wherein the V-pack filter is operably mounted in the apparatus. The apparatus also has a second, unload orientation wherein the V-pack filter is in a loosened positioned for separation from the apparatus. The interlocking arrangement includes first and second interlocking devices. The V-pack filter includes the first interlocking device. The second interlocking device is orientated in the apparatus and is mounted on a member separate from the V-pack filter. The interlocking arrangement is constructed and arranged such that when the retention system is in the first, locked orientation and the apparatus is oriented in the first, operable orientation, the first and second interlocking devices engage, typically by a male/female fit.

In another aspect of this discussion, an example embodiment involves a V-pack filter. The V-pack filter includes structure analogous to that above.

In another aspect of this discussion, an example embodiment involves a method of locking a V-pack filter in an operable position around an aperture.

### III. Summary of the Logic Control System

In one aspect of this discussion, an example embodiment includes a method of operating an engine air intake filter assembly having a pulse jet cleaning arrangement constructed and arranged to selectively direct pulses of air through an air filter arrangement. The method includes measuring a pressure drop across the filter arrangement; measuring an engine load during an engine operation; and activating a pulse valve of the pulse jet cleaning arrangement to direct a pulse of air, in a reverse direction, through the air filter arrangement in response to the engine load being below a predetermined engine load and the pressure drop exceeding a predetermined pressure drop.

In another aspect of this discussion, an example embodiment includes a system for operating an engine air intake filter assembly having a pulse jet cleaning arrangement constructed and arranged to selectively direct pulses of air through an air filter arrangement. The system includes a pressure drop component, an engine load component, and a pulse firing component. The pressure drop component receives a measured pressure drop across the air filter arrangement. The engine load component receives a measured engine load during an engine operation. The pulse firing component activates a pulse valve of the pulse jet cleaning arrangement to direct a pulse of air, in a reverse direction, through the air filter arrangement in response to the engine load being below a predetermined engine load and the pressure drop exceeding a predetermined pressure drop.

Another aspect of this discussion includes a computer program product readable by a computing system and encoding instructions for a computer process for operating an engine air intake filter assembly having a pulse jet cleaning arrangement constructed and arranged to selectively direct pulses of air through an air filter arrangement. The computer process includes the method as previously discussed.

### Brief Description of the Drawings

Fig. 1 is a schematic front elevational view of an assembly according to the present invention;
Fig. 2 is a schematic, right side elevational view of the assembly shown in Fig. 1;
Fig. 3 is a schematic, top plan view of the assembly shown in Fig. 1;
Fig. 4 is a schematic, front prospective view of the assembly shown in Fig. 1;
Fig. 5 is a schematic, rear perspective view of the assembly shown in Fig. 1;
Fig. 6 is a schematic, front perspective view analogous to Fig. 4, with portions broken away to show internal detail;
Fig. 7 is a schematic, front elevational view of the assembly as depicted in Fig. 6;
Fig. 8 is a schematic, internal prospective view of portions of the assembly of Fig. 1;
Fig. 9 is a schematic, front elevational view of the assembly as depicted in Fig. 8;
Fig. 10 is a schematic, enlarged, front elevational view of portions of the internal assembly of Fig. 1;
Fig. 11 is a schematic, enlarged, side elevational view of portions of the internal assembly of Fig. 1;
Fig. 12 is a schematic, top plan view of the bottom portion of the assembly shown in Fig. 10;
Fig. 13 is a schematic, top perspective view of the bottom portion of the assembly shown in Fig. 12;
Fig. 14 is a schematic, side elevational view of the bottom portion of the assembly shown in Fig. 12;
Fig. 15 is a schematic, front elevational view of the assembly of Fig. 1 with portions of the assembly removed;
Fig. 16 is a schematic, perspective view of the first chamber of the assembly of Fig. 1, with portions broken away to show internal detail;
Fig. 17 is a schematic, perspective view of the primary element of the second chamber of the assembly of Fig. 6;
Fig. 18 is a schematic, perspective view of the safety element of the second chamber of the assembly of Fig. 6;
Fig. 19 is a schematic, end elevational view of one of the V-packs of Fig. 6;
Fig. 20 is a schematic, side elevational view of one of the V-packs of Fig. 6;
Fig. 21 is a schematic, top plan view of one of the V-packs of Fig. 6;
Fig. 22 is a schematic, perspective view of a retention system of the assembly of Fig. 6;
Fig. 23 is a schematic, top plan view of the retention system of Fig. 22;
Fig. 24 is a schematic, side elevational view of the retention system of Fig. 22;
Fig. 25 is a schematic, front elevational view of the retention system of Fig. 22;
Fig. 26 is a schematic, end elevational view of portions of the second chamber of the assembly of Fig. 6;
Fig. 27 is a schematic, cross-sectional view taken along line 27-27 of Fig. 26;
Fig. 28 is a schematic, perspective view of an example embodiment of the charge tank of the assembly of Fig. 10;
Fig. 29 is a schematic, top plan view of the charge tank of Fig. 28;
Fig. 30 is a schematic, cross-sectional view of the charge tank of Fig. 29, taken along line 30-30;
Fig. 31 is a schematic, cross-sectional view of the charge tank of Fig. 29, taken along line 31-31;
Fig. 32 is an electrical schematic depicting the interface between a control system of the assembly of Fig. 6 and a vehicle;
Fig. 33 is an electrical schematic showing more detail of the control system of Fig. 32;
Fig. 34 is a flow chart of the logic of the control system of Fig. 32;
Fig. 35 is a flow chart depicting more detail of the firing of a pulse valve by the control system of Fig. 34;
Fig. 36 is a perspective view of a second embodiment of a V-pack filter;
Fig. 37 is a side, elevational view of the V-pack filter of Fig. 36;
Fig. 38 is a top, plan view of the V-pack filter of Fig. 36;
Fig. 39 is cross-sectional view of a second embodiment of a first chamber of a filter assembly;
Fig. 40 is bottom, plan view of the V-pack filter of Fig. 36;
Fig. 41 is a perspective view of a third embodiment of a V-pack filter;
Fig. 42 is a perspective view of a fourth embodiment of a V-pack filter; and
Fig. 43 is a bottom plan view of a fifth embodiment of a V-pack filter.

### Detailed Description

### I. Disclosure

### A. Environment of Use; System Demand

The arrangements depicted in drawings 1-35 and the principles defined in association with them, were specifically designed for advantageous application in certain types of equipment and work environments. While the principles could be applied in a variety of alternate applications, the unique arrangements described are particularly advantageous for the identified systems of use.

Typical systems in which equipment of the type defined therein will be useful are engine applications concerning large engines, typically 500 to 2,000 hp (37.3-149.2 KW). Such engines are generally defined by air flow demands on the order of about 1,300 to 4,500 cfm (81,000 to 281,000 pwm).

In general, it is desirable that such equipment be able to operate with no more than about 25 inches (63.5 cm) of water restriction across the air cleaner system. With conventional air filter technology this could mean that, due to air filter occlusion, the air filters would generally need to be changed with a frequency of about 250 hours. Longer periods of time between air filter changing and refurbishment without operation above the limiting restriction of about 25 inches (63.5 cm) of water have been sought by manufacturers and users of such equipment.

### B. A Typical Improved System

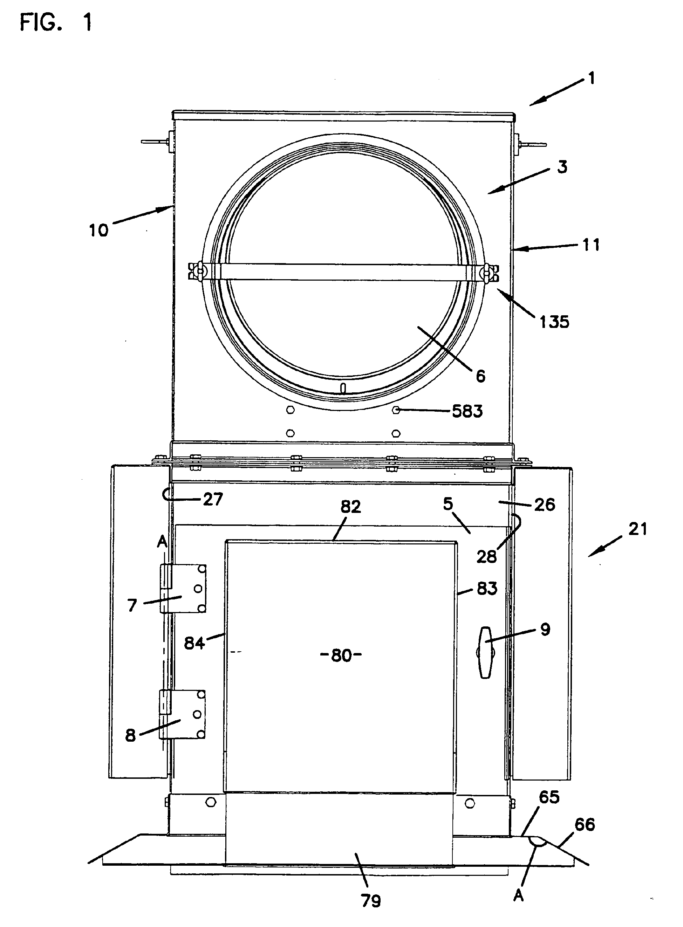

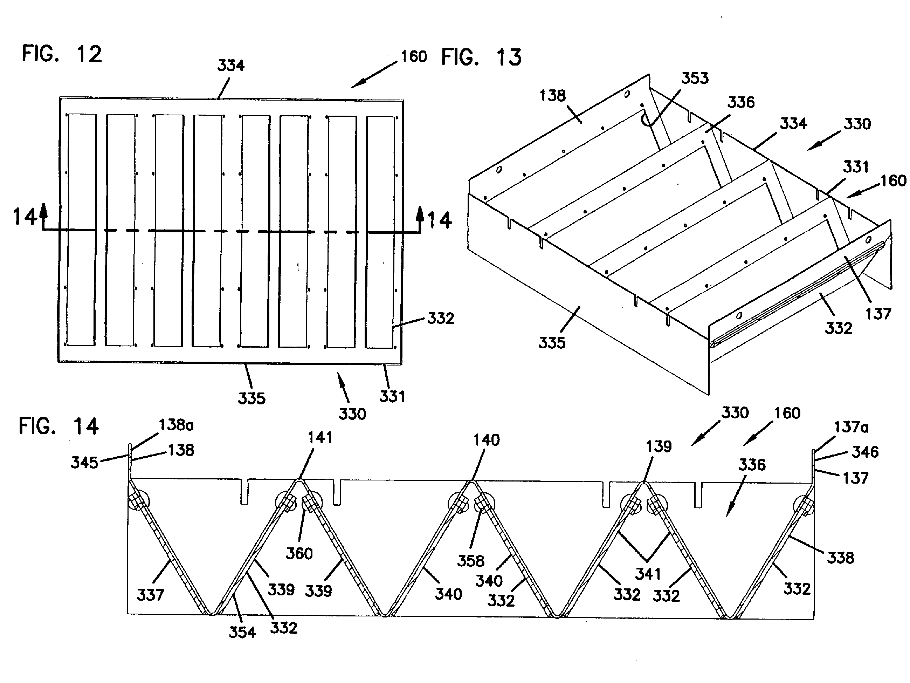

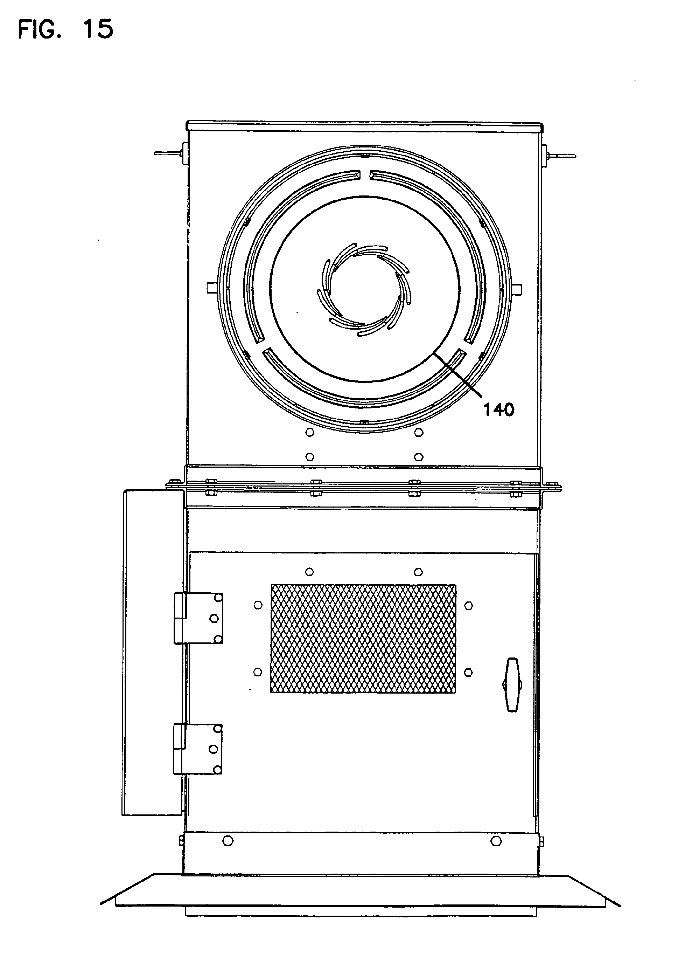

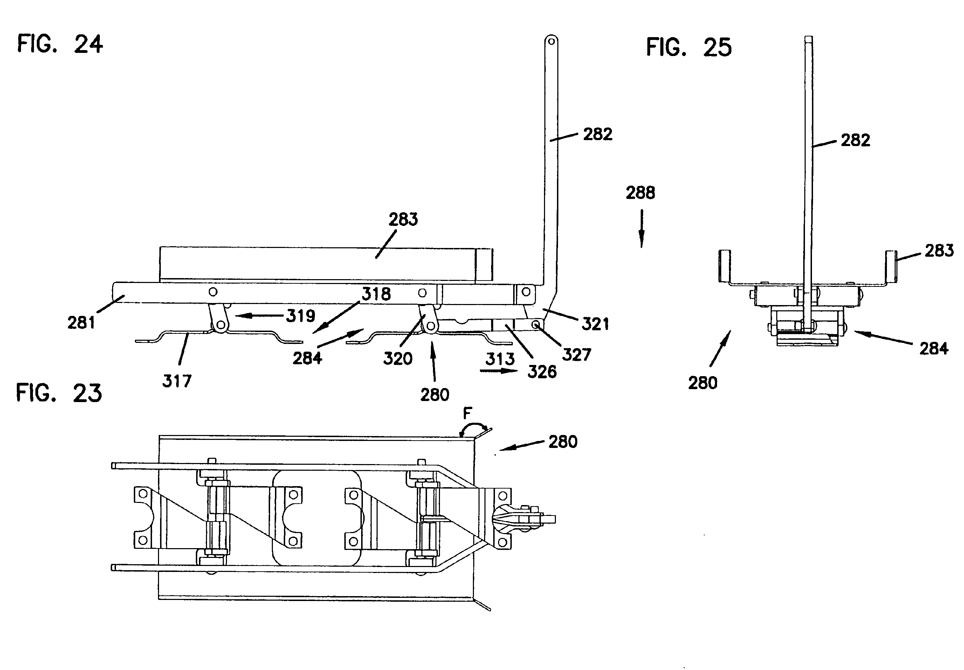

In Figs. 1-35, an air cleaner system is depicted.

Assemby I has a front side 3 with access doors, hatches or covers 5 and 6 that are secured by hinges 7,8. Cover 5 includes a latching device 9.

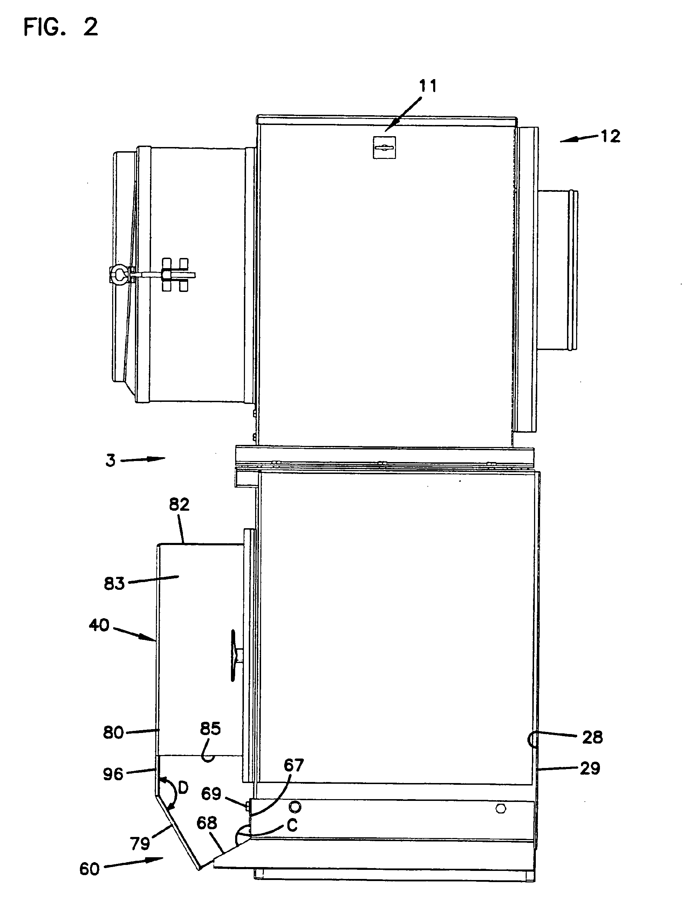

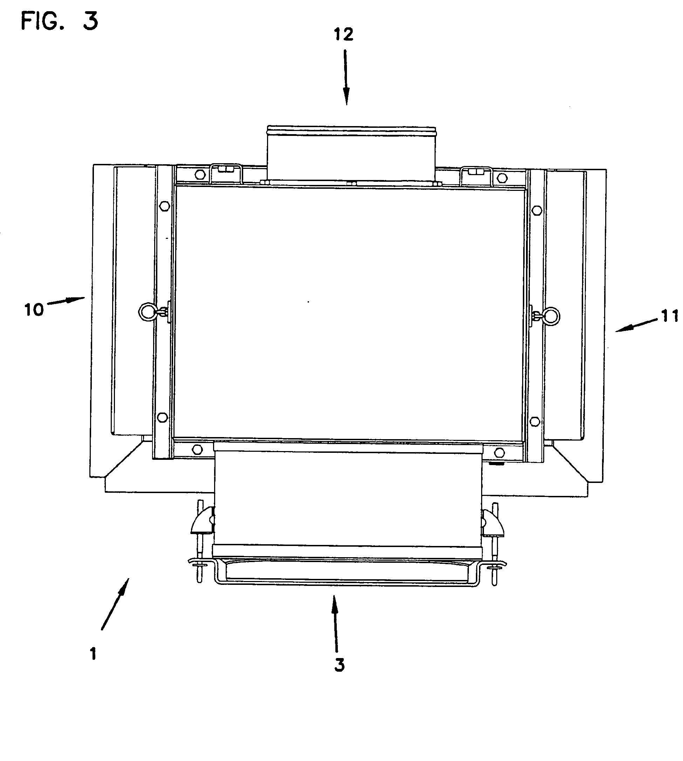

The particular assembly 1 depicted in Figs. 1-5 is somewhat rectangular in horizontal cross-section. Thus, it has four sides of which the front side 3 have already been designated. The other sides comprise sides 10, 11. and 12, identified in general in Fig. 1 (front elevation), Fig. 2 (side elevation), and Fig. 3 (top plan). The side 12 would typically be referenced as the back, or rear, side; i.e., the rear side 12 facing opposite the front side 3 of the assembly 1.

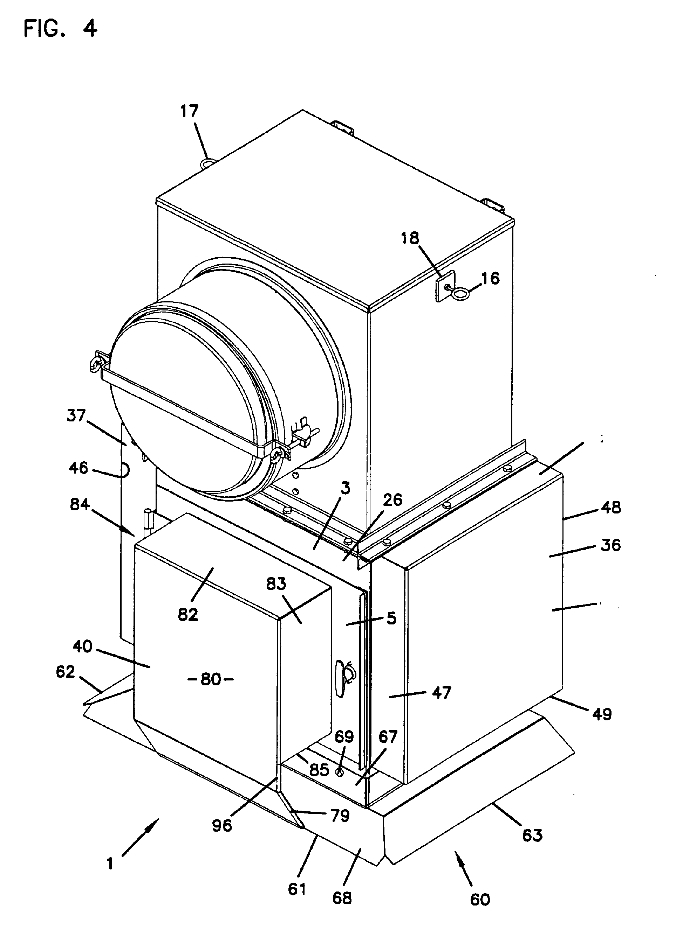

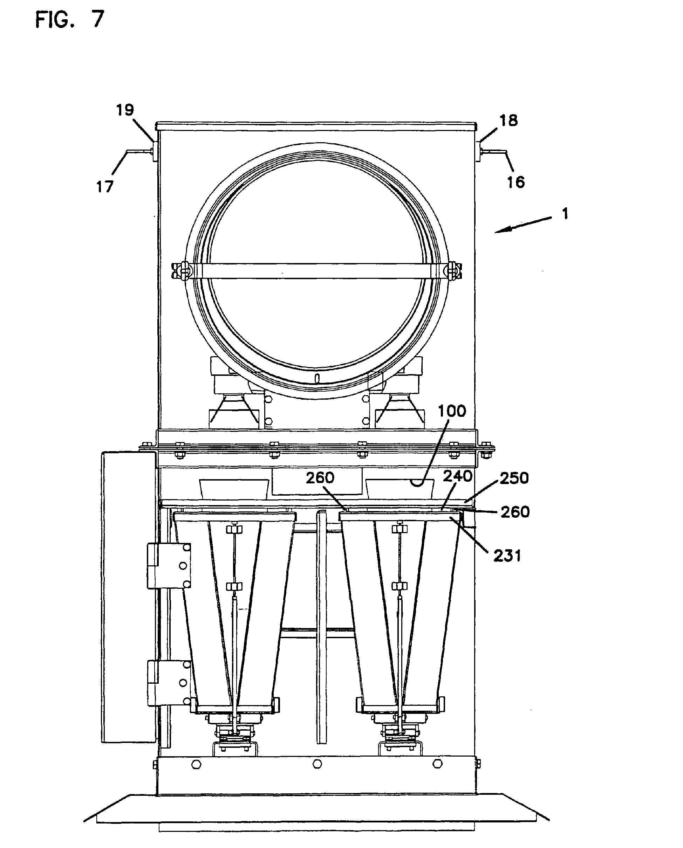

Referring to Fig. 4, first and second lifting rings 16, 17 are attached to first and second plates 18, 19, Fig. 7.

In general, the air cleaner assembly 1 includes an outer housing 20 divided into first and second chambers 21 and 22. A first stage air cleaner arrangement 24 is positioned in chamber 21, and a second stage air cleaner 25 is positioned in the second chamber 22.

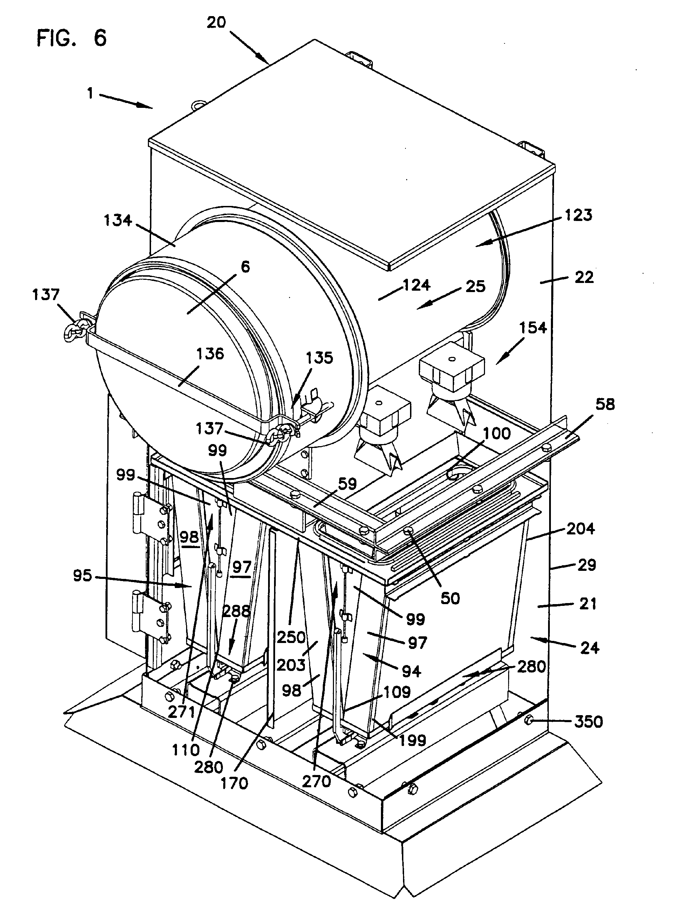

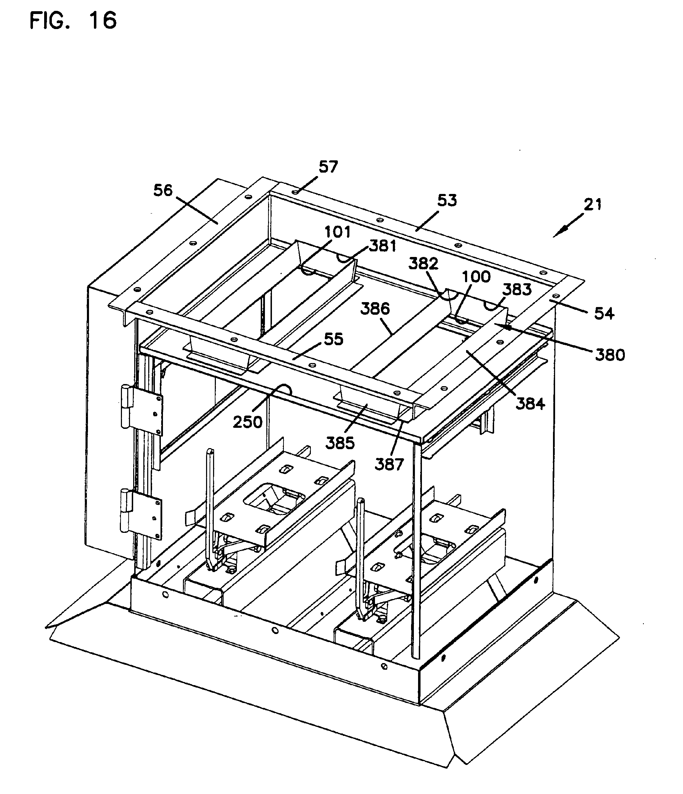

Attention is directed to Fig. 16. The first chamber 21 is constructed with first, second, third, and fourth flanges 53-56. Preferably, each of the flanges 53-56 includes a plurality of bolt holes 57. Referring back to Fig. 6, analogously, the second chamber 22 is also constructed with first (not shown), second 58, third 59, and fourth (not shown) flanges including a plurality of bolt holes (not shown). The flanges 58, 59 of the second chamber 22 are arranged and configured to mate with the flanges 53-56 (Fig. 16) of the first chamber 21 and the bolt holes 57 of the first chamber 21 are arranged and configured to align with the bolt holes of the second chamber 22, such that a plurality of bolts 50 positioned through the plurality of bolt holes 57 secure the first chamber 21 to the second chamber 22.

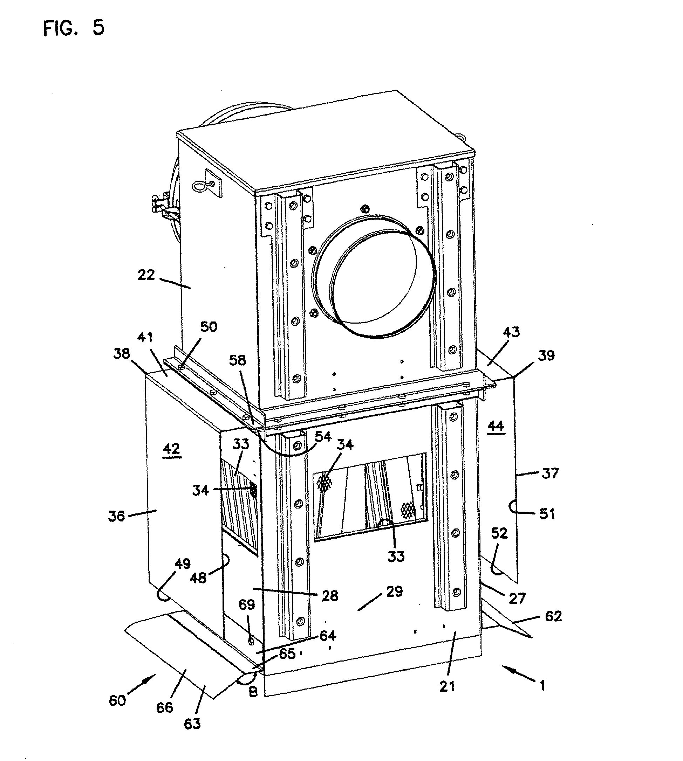

In general, the first or lower chamber 21, Figs. 1 and 2, is defined by first, second, third, and fourth side walls 26 (front), 27 (side), 28 (side), and 29 (back). Attention is directed to Fig. 5. Each of the side walls 26-29 (Figs. 1,2, and 5) has defined therein an open aperture, air inlet, or window 33 through which air to be filtered by the air cleaner assembly 1 can pass into the assembly 1 for cleaning. Each of the air inlets 33 is, in preferred embodiments, covered by a protective screen 34. The air inlet 33 and the screen 34 in the rear panel 29 are viewable in Fig. 5, as are the air inlet 33 and screen 34 in panel 28.

Still referring to Fig. 5 note that mounted on side wall 28 is a first weather cover 36 and a second weather cover 37 mounted on or extending from the side wall 27. Referring to Fig. 4, it is noted that the assembly 1 also includes a third weather cover 40 on the front side 3. In the embodiment shown, the third weather cover 40 is mounted on the first access cover 5.

Referring back to Fig. 5, air to be filtered by the air cleaner assembly 1 passes into the air cleaner assembly 1 through the air inlets 33. In the preferred embodiment shown, the air inlets 33 allow for direct transfer of the air into the first chamber 21 (Fig. 6). By the term "direct," or variants thereof in this context, reference is meant to air flow from the exterior environment that does not first pass into the second chamber 22. Referring back to Fig. 6, within the first chamber 21, the air is passed through the first stage air cleaner 24. For the particular arrangement shown in Fig. 6 the first stage air cleaner 24 includes two V-shaped a filter constructions 94, 95, sometimes referred to therein as V-packs. Detail concerning the preferred construction of the V-shaped filter constructions 94, 95 is provided in U.S.S.N. 09/325,697. In general, the V-shaped filter constructions 94, 95 are preferably identical in construction, and each includes first and second opposite filter panels 97 and 98. The panels 97 and 98, for each V-shaped filter 94, 95, are mounted in a frame 199 to define an internal, V-shaped, interior chamber or clean air plenum 99. The air is filtered as it passes from the region exterior to the V-shaped filters 94, 95 to the clean air plenum 99. After this filtering in the first stage 24, the air then passes through passageways 100, 101, Fig. 16, into the upper chamber 22.

For the particular arrangement shown in Fig. 6 the V-packs or.V-shaped air filter constructions 94, 95 are vertically oriented. By the term "vertically oriented," it is meant that in the normal installation on vehicles or equipment standing on level ground the orientation of the V-shaped filter elements 94, 95 will be such that vertices 109, 110, respectively, of the V's are directed downward. It is, of course, possible to use alternate constructions in association with the techniques described herein, although the vertically oriented configuration shown in Fig. 6 is preferred.

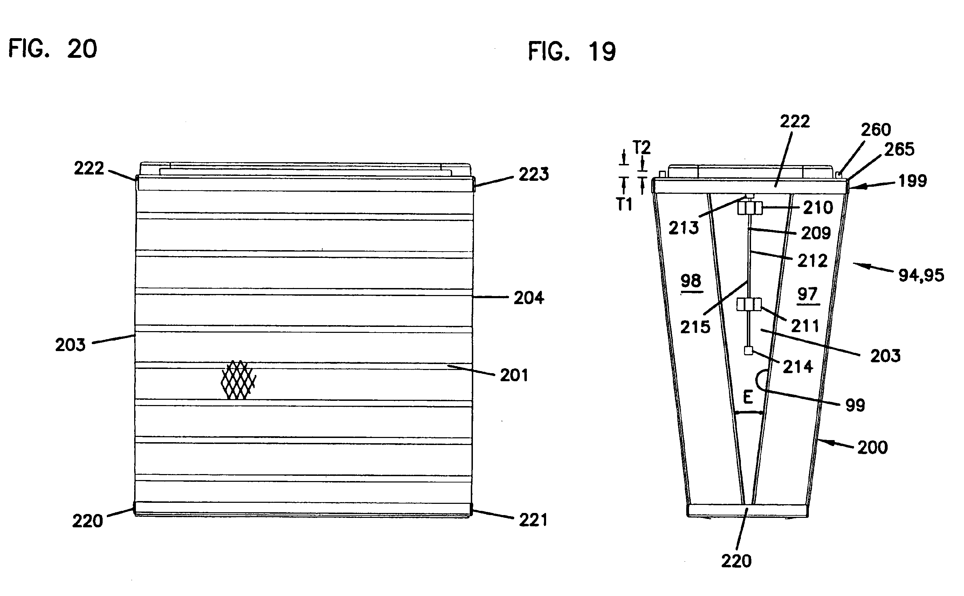

Alternate orientations would include an "inverted orientation," which would be one in which the vertices 109, 110 of the V's are directed upward; and, laterally oriented ones, in which the vertices 109, 110 of the V's are directed sideways. There would, in general, be two types of laterally oriented arrangements: one in which the elements 94, 95 are standing on one of the ends 203, 204; and ones in which the ends 203, 204 extend orthogonally to the ground. Of course, alternate configurations of the overall assembly 1 would be needed for alternate orientations of the V-packs 94, 95. Although alternate orientations and configurations are possible, the "vertical" orientation for the V-shaped filters 94, 95 will be preferred, for reasons of: air flow, pulse cleaning, assembly, and servicing. The preferred V-packs 94, 95 are characterized below in connection with Figs. 19-21.

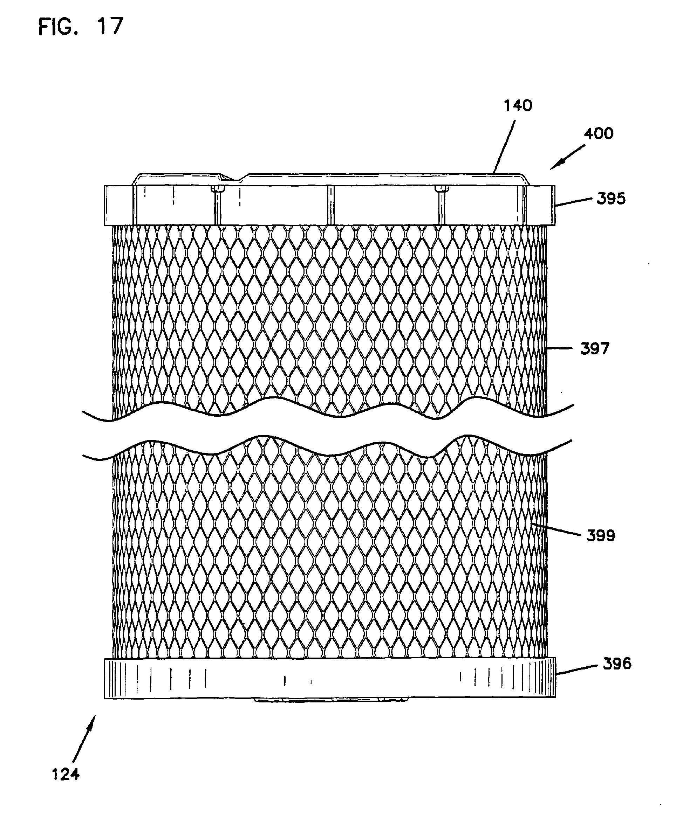

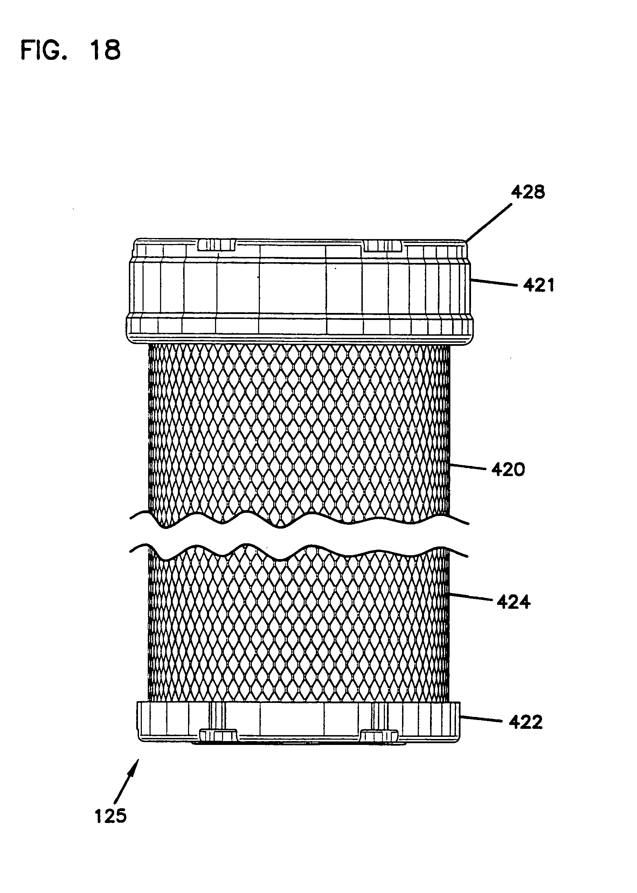

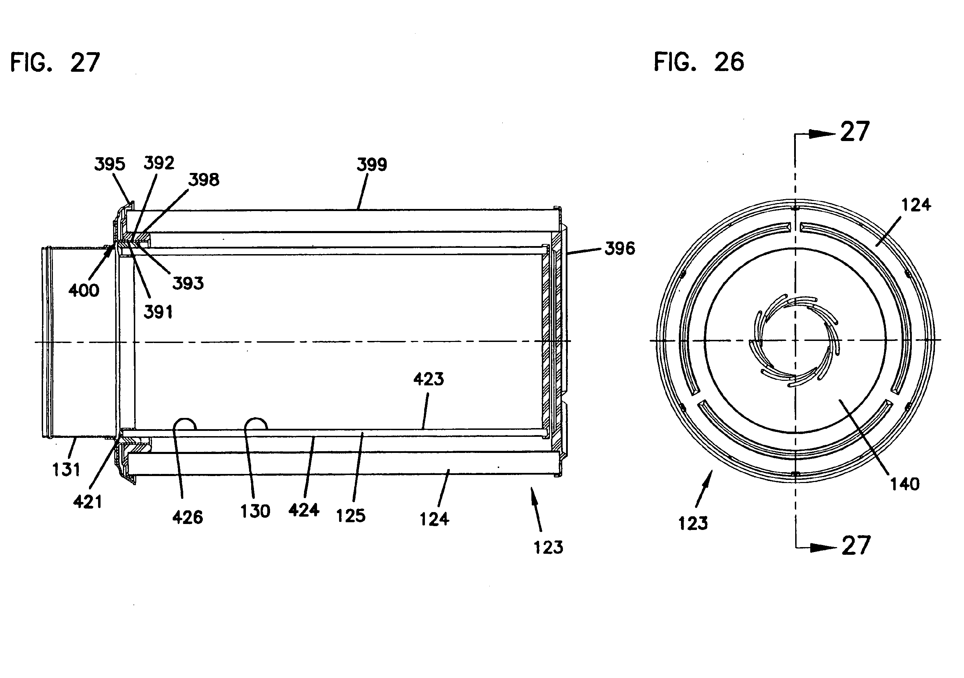

The upper chamber 22 includes, positioned therein, the second stage filter system 25. For the arrangement shown, the second stage filter system 25 comprises a cylindrical filter construction 123. Attention is directed to Figs. 26 and 27. Fig. 26 is a schematic, end elevational view of portions of the cylindrical filter construction 123. Fig. 27 is a schematic, cross-sectional view taken along line 27-27 of Fig. 26. For the particular arrangement shown, the cylindrical construction 123 includes a primary element 124, shown in perspective view in Fig. 17, and a secondary or safety element 125, shown in perspective view in Fig. 18. During operation, the air is passed through the primary element 124 and the safety element 125 into a central clean air plenum 130. The filtered air then passes outwardly through outlet tube 131 to the engine air intake duct (not shown).

Periodically, it may be desirable to remove the primary element 124, and in some instances the safety element 125, for inspection and in some instances refurbishing or replacement. Referring back to Fig. 6 the second cover 6 provides access for this. The second cover 6 is mounted on a cylindrical extension 134 and is secured in place by a clamp arrangement 135. When the clamp arrangement 135, which comprises a strap 136 secured by bolts 137, is loosened, access through the tube or extension 134 is provided to an end 140, Fig. 26, of the primary element 124. The primary element 124 can thus be grasped and be removed from its mounting on the outlet tube 131, Fig. 27, exposing the safety element 125, Fig. 27, that can also be removed if desired.

Details concerning the preferred construction and mounting of the primary element 124 and the safety element 125 are provided in the below and in the '697 application, in connection with Figs. 1 5, 17, 18, 26, and 27.

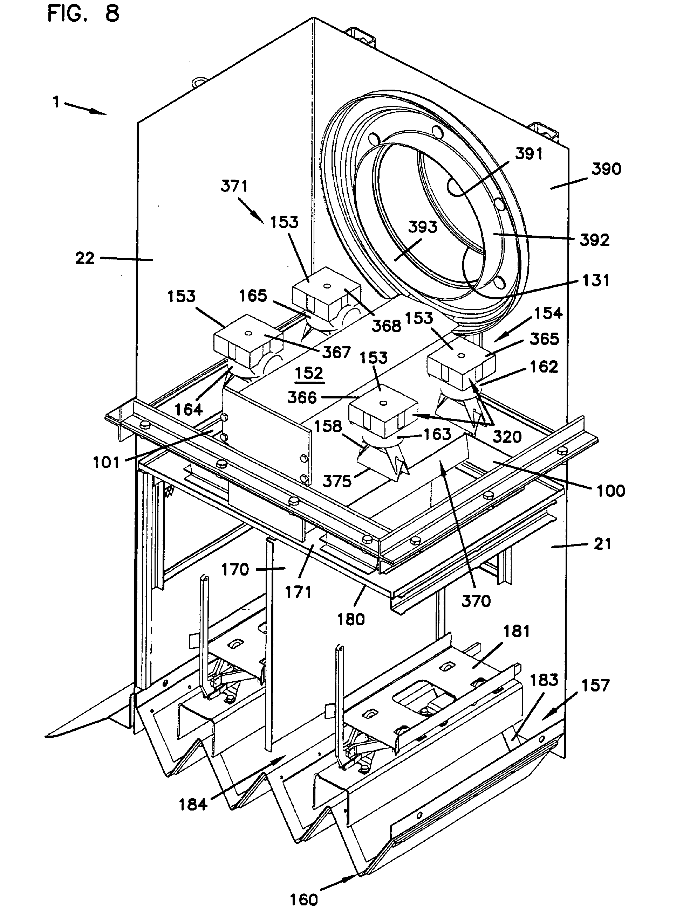

Attention is directed to Figs. 7 and 8. Fig. 7 is a front elevational view showing the assembly 1 with portions of the top, the right side 11, Fig. 1, and the front side 3, Fig. 1, removed to show certain internal parts. In Fig. 8, the assembly 1 is shown without the V-shaped constructions 94, 95, the primary element 124, and the safety element 125. Fig. 8 is analogous to Fig. 7, but with additional portions removed to show more internal detail and represents a perspective view.

Again referring to Fig. 6 the first stage air cleaner 24 includes a reverse pulse cleaning arrangement 154. Periodically, preferably in accord with a selected program schedule as described hereinbelow, the reverse pulse cleaning system 154 is operated to direct reverse jets of air through the V-shaped constructions 94, 95 in the first stage 24. This will serve to knock dust cake off the outer or upstream surfaces of the panels 97 and 98 of the V-shaped constructions 94, 95. Referring to Fig. 8, the dislodged dust will, under gravity influence, pass toward a bottom region 157 of the first chamber 21 and outwardly through a dust exhaust valve arrangement 160. A preferred construction of the dust exhaust valve arrangement 160, as shown in Figs. 8, and 12-14, is discussed the '697 application:

Referring to Fig. 8 in order to generate and direct the cleaning jets of air, the pulse cleaning system 154 includes four pulse jet nozzles 162, 163, 164, 165; two associated with each V-pack 94, 95 (Fig. 6). Specific preferred constructions of the pulse jet nozzles 162-165 are discussed in greater detail below and in the '697 application.

Referring to Figs. 6 and 8 a central baffle 170 is positioned in the first chamber 21, between the two V-packs 94, 95. The central baffle 170 depends downwardly from a tube sheet 171, generally at least 50% or more, preferably at least 70%, and most preferably at least 90% of the distance between a top 180 of the first chamber 21, and a lowest level 181 of extension of the V-packs 94, 95, when the V-packs 94, 95 are positioned for filtering. Preferably, the baffle 170 extends below this lower level 181. The baffle 170 helps prevent dust that has been blown off the V-packs 94, 95 by the air from the pulse jet nozzles 162-165 from being transferred to the next adjacent V-pack 94, 95. Rather, due to the baffle 170, the dust is more likely to pass downwardly to the bottom 183 of the first chamber 21.

The term "bottom end 183," when used in connection with the characterization of the first chamber 21, refers to a region 184. It will be understood from further descriptions that the region 184 is the location at which equipment that supports the V-packs 94, 95 is positioned within the assembly 1. The portion of the housing 20 that includes the dust exhaust valve arrangement 160 generally depends downwardly from the bottom end 183.

### C. The V-Pack Filters

Attention is directed to Figs. 19-21. In Fig. 19, one of the V-packs 94, 95 is depicted. Each V-pack 94, 95 comprises a pair of panels 97, 98. The panels 97, 98 each comprise an outer frame 199 with media 200 positioned therein. For the preferred arrangements the media 200 is pleated and oriented such that when the V-pack 94, 95 is positioned in the vertical orientation of Fig. 6, the pleats 201 extend horizontally. In general, the media 200 is potted within the frame 199 by an adhesive material such as PVC plastisol (i.e., a polyvinylchloride). Commercially available potting plastisols can be used.

A variety of materials can be utilized for the media 200. In general, what is required is an appropriate media to achieve a preferred level of efficiency for the V-packs 94, 95. The media chosen for the V-packs 94, 95 is a matter of choice; a variety of conventional medias can be used. For a high-level of cleaning from pulse cycles, a robust media is preferred to help prevent particles from penetrating into the fibers of the media when loading. That is, it is preferred that the media be of a type such that particles will be captured on the outer surface of the media. Usable materials include cellulose or synthetic fiber media.

On the upstream side, a deposit or layer of polymeric fiber material, or "fine fiber," generally having a fiber diameter of 5 microns or less, can be used, in some applications. The amount of fine fiber deposited is a matter of design choice for a given application. In general, the more fine fiber that is used, the larger the restriction. Conversely, the less fine fiber that is used, the higher the occurrence of penetration of the particles during loading. That is, the fine fiber facilitates surface loading and pulse jet cleaning.

One media comprising a fine fiber deposited onto a paper or cellulose material is practiced by Donaldson Company, Inc., the assignee of the present application, in products generally identified under the trademark EON™. These media are manufactured by a trade secret process of Donaldson's. Such media would be useable in arrangements according to the present invention. However, the technique of fine fiber application is not critical to the principles disclosed, and a variety of conventional, well-known, processes could be used.

Each of the V-packs 94, 95 includes first and second opposite end panels 203, 204. The end panels 203, 204 close ends of the clean air plenum 99 when the V-packs 94, 95 are sealed for use. For convenience, one of the panels 203 is shown having a wire handle 209 positioned thereon, Fig. 19. The wire handle 209 is secured in extension between brackets 210, 211. The wire handle 209 comprises an extension of wire 212 having end stops 213, 214 thereon. When a central portion 215 of the flexible wire 212 is pulled, the handle 209 will bow outwardly until the end stops 213, 214 engage the brackets 210, 211. A flexible, collapsible, handle construction 209 is convenient for mounting and dismounting the V-packs 94, 95 and also for carrying the V-packs 94, 95.

Of course, alternate handle designs may be used. For example, a pivotally mounted rigid handle may in some instances be substituted for the type of handle configuration depicted in the figures. In general, preferred handle constructions will be ones that have a flat, enclosed configuration that can be readily opened to be grasped.

In each V-pack 94, 95, the pair of panels 97, 98 is oriented in a V-shape, as shown in Fig. 19. Along one longitudinal edge 220, 221 of each panel 97, 98, the panels 97, 98 are oriented either adjacent one another or closely spaced, whereas along opposite side edges 222, 223, the panels of 97, 98 are spread apart from one another. That is, preferably the panels 97, 98 form a V-shape, most preferably having a filter angle E, Fig. 19, between the panels 97, 98, of at least about 5°, preferably within the range of 10 to 25°, most -preferably about 13 to 17°.

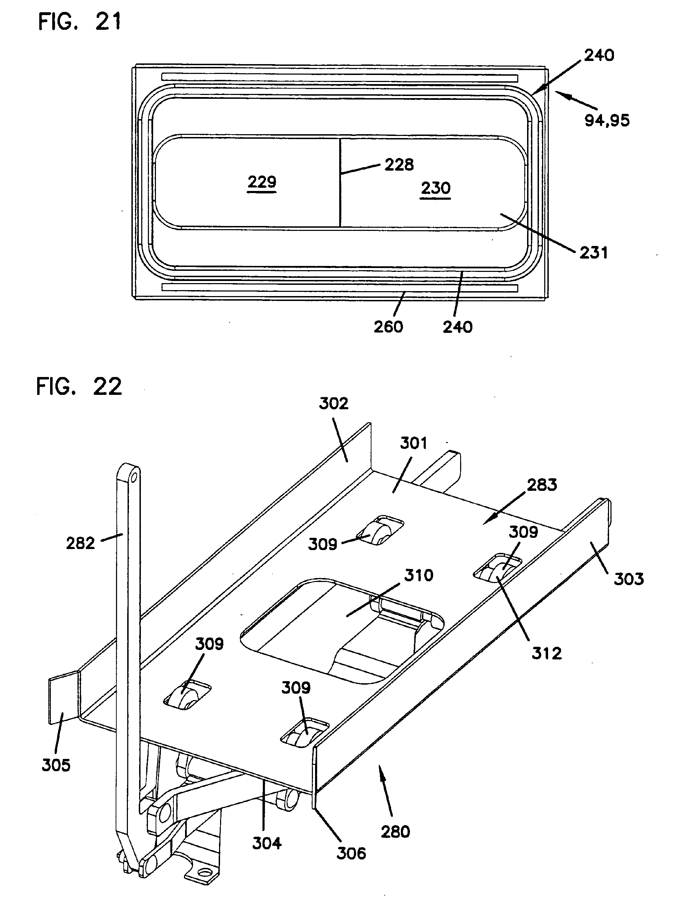

Referring to Fig. 21 each V-pack 94, 95 preferably includes a central spacer 228 separating the V-pack 94, 95 into separate regions 229, 230. In use, a separate one of the nozzles 162-165, Fig. 8, is directed into each region 229, 230. The central spacer 228 directs the air from each nozzle 162-165 to an associated region 229, 230 of the V-pack filters 94, 95 to provide directed air sufficient to clean the exterior portions of the panels 97, 98.

The air flow exit end 231 of each V-pack 94, 95 includes a seal arrangement, i.e. a gasket, 240 thereon having a first projection thickness T1. When each V-pack 94, 95 is operatively positioned within the air cleaner assembly 1, the seal arrangement 240 is pressed between an end 231 of the V-pack 94, 95 and the tube sheet 250, as shown in Fig. 7. In general, the seal arrangement 240 is sized to be sealingly positioned around the aperture 100 in the tube sheet 250, Fig. 7.

The preferred V-packs 94, 95 also include a hard stop arrangement 260 thereon have a second projection thickness T2 less than the first thickness T1. Preferably the hard stop arrangement 260 is configured to extend the second thickness T2 of at least about 0.1 inches (2.5 mm), typically about 0.2 inches (5.1 mm) to 0.3 inches (7.6 mm), above (or outwardly from) a top surface 265 of the V-pack frame 199. Also, preferably the seal arrangement 240 is selected such that, prior to being pressed, the seal arrangement 240 extends at least about 0.1 inches (2.5 mm) to 0.3 inches (7.6 mm) beyond the hard stop arrangement 260. In other words, the thickness T1 of the seal arrangement 240 is at least about 0.1 inches (2.5 mm) to 0.3 inches (7.6 mm) greater than the thickness T2 of the hard stop arrangement 260. The hard stop arrangement 260 provides for a hard contact against the tube sheet 250, Fig. 7, as the V-packs 94, 95 are moved into position. For the preferred V-pack 94, 95, Fig. 19, the hard stop arrangement 260 comprises a metal such as steel. Most preferably, the seal arrangement material is polyurethane, having a thickness of at least 0.40 inches in extension outwardly from the surface 265 of the V-pack frame 199.

### D. The V-Pack Retention System

When the V-packs 94, 95 are operatively positioned, Fig. 6, each V-pack 94, 95 is under a force of compression, in the direction of arrows 270, 271, respectively, toward the tube sheet 250. To maintain sealing around the seal arrangements 240, retention systems 280 provide a force of compression.

Referring to Figs. 22-25 retention systems 280 each include a base structure 281, a control arm 282, a moveable seat 283, and an adjustable lift link arrangement 284.

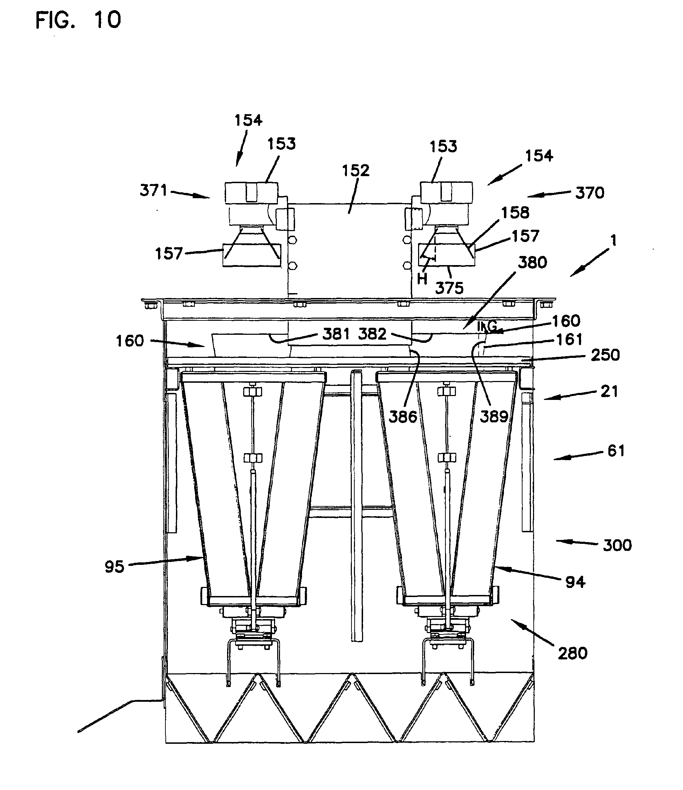

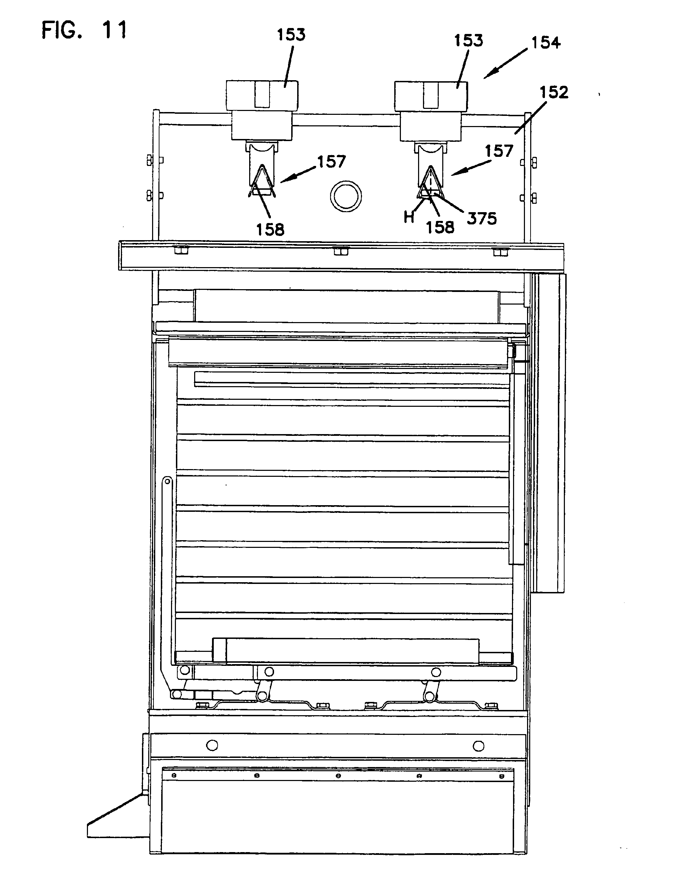

In Fig. 10, the chamber 21 is depicted with the V-packs 94, 95 present. Further, in Fig. 10, the retention system 280 is depicted in the raised or lifted configuration. Fig. 11 is a side view of Fig. 10, taken from the direction of arrow 300.

In Figs. 22-25 the base structure 281, control arm 282, and seat 283 of the retention system 280, are more readily viewed.

### E. The Dust Ejector Valve Arrangement

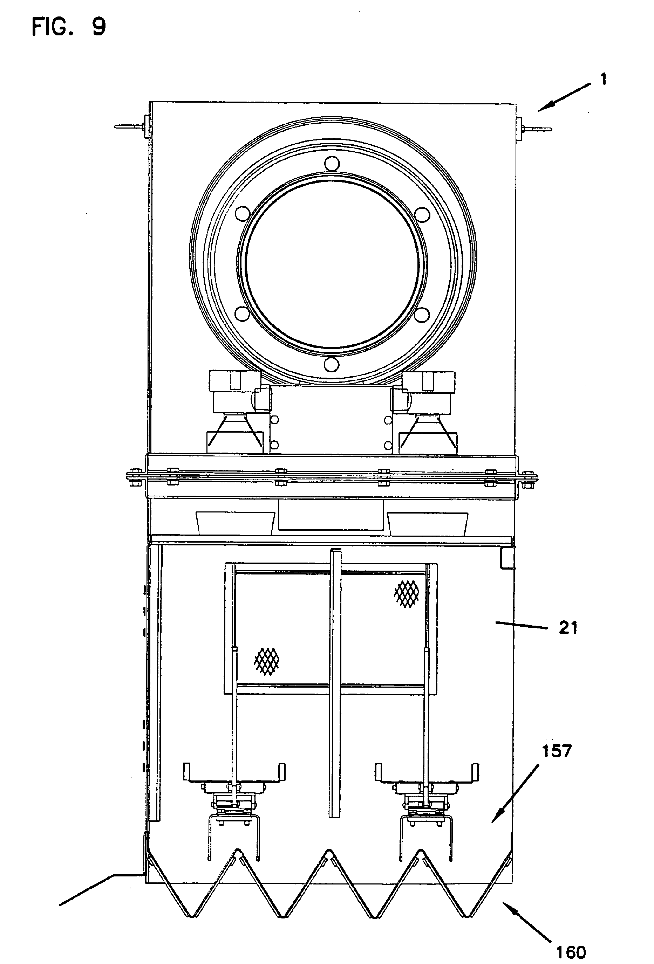

The arrangement shown in Figs. 9, and 12-14 includes an elongated dust ejector valve arrangement 160 for removal of the dust from the air cleaner assembly 1, Fig. 6. The dust ejector valve arrangement 160 is mounted as part of the bottom 183 of the assembly I of Fig. 8.

### F. The Pulse Cleaning System

Attention is directed to Figs. 10 and 11. In general, the pulse jet cleaning system uses pulses of air to clean the V-packs 94, 95. Fig. 10 is a fragmentary, schematic, front elevational view of the lower chamber 21 and the reverse pulse cleaner arrangement 154 with portions removed for viewing internal constructions and components. Fig. 11 is analogous to Fig. 10, taken generally from the view point of arrow 300, Fig. 10. Attention is also directed to Fig. 8, in which the portions of the assembly 1 depicted in Figs. 10 and 11, can be viewed in perspective.

In general, the reverse pulse system 154 can be operated using the air compressor provided by the vehicle manufacturer in the vehicle in which the assembly 1 is mounted. That compressor can be used to charge the charge tank, or storage tank, indicated at 152. In general, the pulse jet of air is directed in a reverse direction, backwards, or as a back flush through the V-packs 94, 95. By the term "in a reverse direction," it is meant that the pulse jet of air is directed opposite to normal air flow (i.e., filtering air flow) during filtering of ambient air. Such a direction of air flow will tend to flush dust or other particles collected on the V-packs 94, 95 there from.

The pulse jet system 154 may, in general, except for the particular preferred geometric configurations described and shown herein, be similar to the arrangements described in U.S. Patents Nos. 4,364,251, 4,331,459, and 5,575,826.

### G. The Second Stage Air Cleaner

Referring to Fig. 6, in general, the second stage air cleaner 25 positioned in chamber 22 is constructed as follows. Referring to Fig. 8, projecting into the interior of chamber 22 from interior rear wull 390 is a circular mounting flange or tube 391**.** The outer surface 392 of thc tube 391 is a surface against which the primary element 124, Fig. 17, seals, during assembly (see Fig. 27). The inner surface 393 of the tube 391 is the surface against which the safety element 125, Fig. 18, seals, during assembly (see Fig. 27).

A preferred primary element 124 is depicted in Fig. 17. The primary element 124 comprises first and second opposite end caps 395 and 396 with filter media 397 extending therebetween. The particular element 124 depicted includes inner 398, Fig. 27, and outer liners 399, although in some applications one or both of these liners may be absent. The end cap 395 is open. A typical end cap construction is described in U.S. Patent 5, 897, 676. The end cap 395 includes a radial sealing region 400 positioned therein. In operation, the radial sealing region 400 seals against an outer surface 392, Fig. 27, of the mounting tube 391 preferably using a radial seal construction system such as that described in EP 0329659. Preferably the end cap 396, Fig. 17 is a completely closed end cap, having no apertures therein.

A variety of materials or combinations of materials can be utilized for the media 397. In general, what is required is an appropriate media to achieve a preferred level of efficiency for the filter element 124.

In general, it is anticipated by U.S.S.N. 09/325,697 that for many preferred arrangements, the media 397 will comprise a pleated media such as cellulose. If desired, such media can be improved, for overall efficiency, by providing thereon a deposit or layer of "fine fiber" material, typically a material having an average fiber diameter of 5 microns or less.

One particular commercially used media comprising a fine fiber deposited onto a paper or cellulose material is practiced by Donaldson Company, Inc., the assignee of the present application, in products generally identified under the trademark EON™. These media are manufactured by a trade secret process of Donaldson's. Such media would be useable in arrangements according to the present invention.

One useable media, is a media having a frazier permeability within the range of 14.0-18.0 ft/min. (7.1-9.1 cm/sec) and a thickness of about 0.009-0.013 inches (0.2-0.3 mm). Generally, the media will be pleated with the selected pleat depth depending on the particular application. In general, the pleat depth selected will be at least 0.5 inches (1.3 cm), preferably about 0.75 to 2 inches (2-5 cm), and most preferably about 1 inch (2.5 cm) to 1.25 inches (3.2 cm). Pleating, and sealing into a cylindrical configuration, can be conducted utilizing standard, conventional pleat and sealing techniques.

Still other media configurations usable for the element 124 are foam media, fiberous media, or combinations of pleated media with one or more of foam media or fiber step media. Various usable combinations include those described in U.S. Patents 5,622,537 and 5,672,399. The particular media chosen for any given application will, in general, be a function of desired efficiency versus contaminant challenge.

A variety of materials may be utilized for the inner and outer liners 398, 399, Fig. 27 and the same material may not be used for both. In some instances, expanded metal, perforated metal, or plastic materials will be preferred. It is noted that for a desirably functioning radial seal, preferably a portion of the inner liner 398 in region 400, is positioned to operate as a support, backing up the pressing of the end cap 395 in radial seal region 400, during sealing. This is shown in EP 0329659.

For the particular assembly I depicted, the assembly 1 includes a tube 134, Fig. 6, projecting therefrom. The tube 134 allows for the positioning, within chamber 22, of the primary element 124 which is longer than the distance between rear wall 29 and front wall 3, Figs. 1-3. As explained previously, the cover 6, for access to the element 124, is positioned on an end of tube 134.

Attention is directed to Fig. 18. In Fig. 18 the safety element 12S is depicted. The safety element 125 generally comprises media 420 extending between opposite end caps 421 and 422. The safety element 125 includes an inner liner 423, Fig. 27, and an outer liner 424, also extending between end caps 421 and 422.

The end cap 422 is a closed end cap, closing one end of the media 420 and the liners 424 to the passage of air therein. As a result, the media 420 defines an open central area 426, Fig. 27.

The end cap 421 includes a ring 428 of soft, pressible material thereon, constructed and arranged to fit within the tube 134, Fig. 6, to seal against inner surface 393, Fig. 27, of the tube 391 in use. Preferably according to U.S.S.N. 09/325,697, the safety element 125 is sized and configured to fit underneath the primary element 124, when mounted, see for example Fig. 27.

Conventional materials and configurations can be utilized with the safety element 125. With respect to the principals of the present invention, there is no specific preference with respect to the materials of the safety element 125, other than general preferences for conveniently manufactured, efficiently constructed materials.

In general, for many preferred arrangements, the media 420 will comprise a pleated media such as cellulose. Other media configurations usable for the element 125 are foam media, fiberous media, or combinations of pleated media with one or more of foam media, or fiber step media. Various usable combinations include those described in U.S.. Patents 5,622,537 and 5,672,399. The particular media chosen for any given application will, in general, be a function of desired efficiency versus contaminant challenge.

A variety of materials may be used for the inner 423 and outer liners 424, and the same material may not be used for both. In some instances, expanded metal, perforated metal, or plastic materials will be preferred. It is noted that for a desirably functioning seal, preferably a portion of the outer liner 424, Fig. 27, is positioned to operate as a support, backing up the pressing of the end cap 421 during sealing.

### H. The Charge Tank

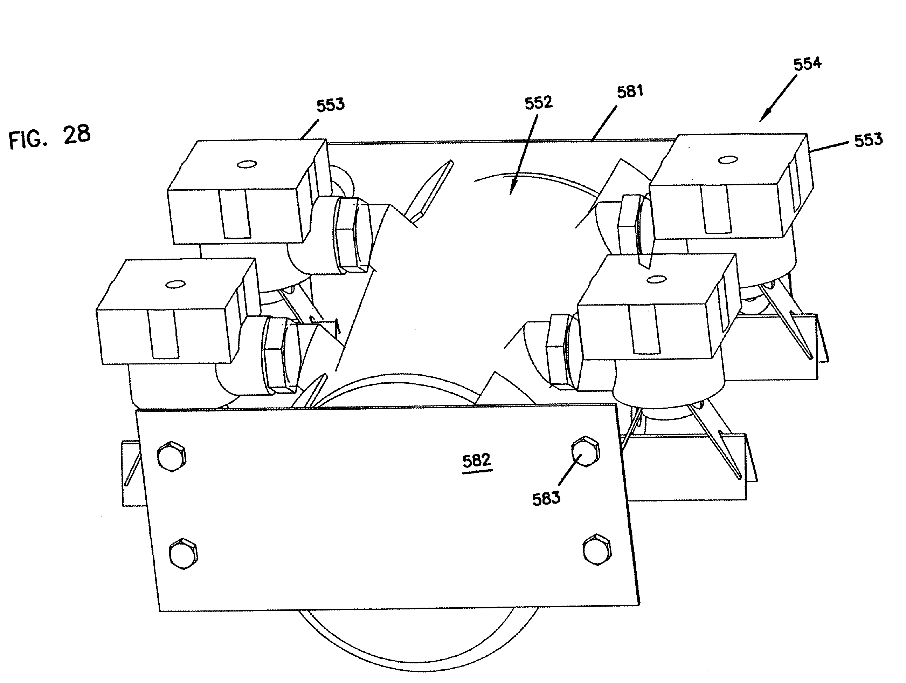

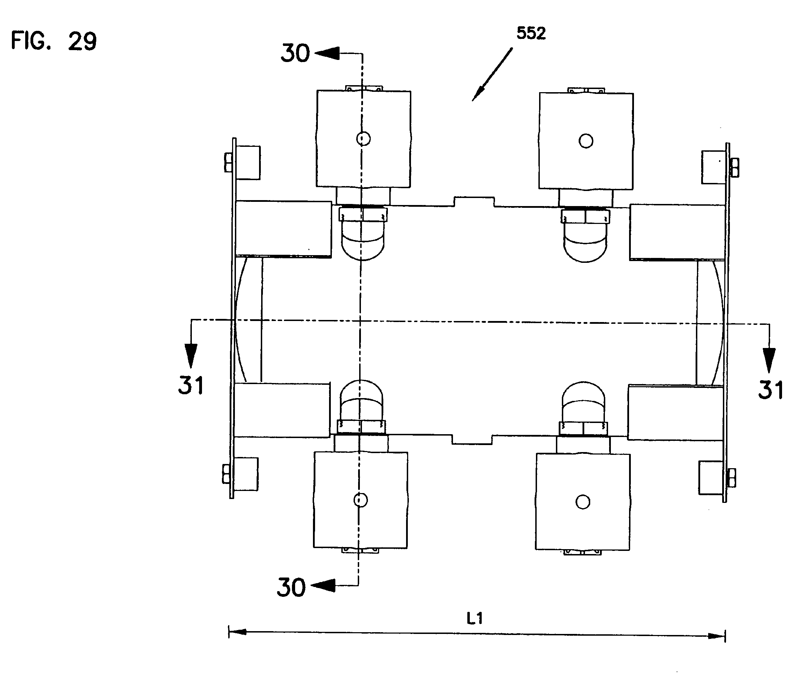

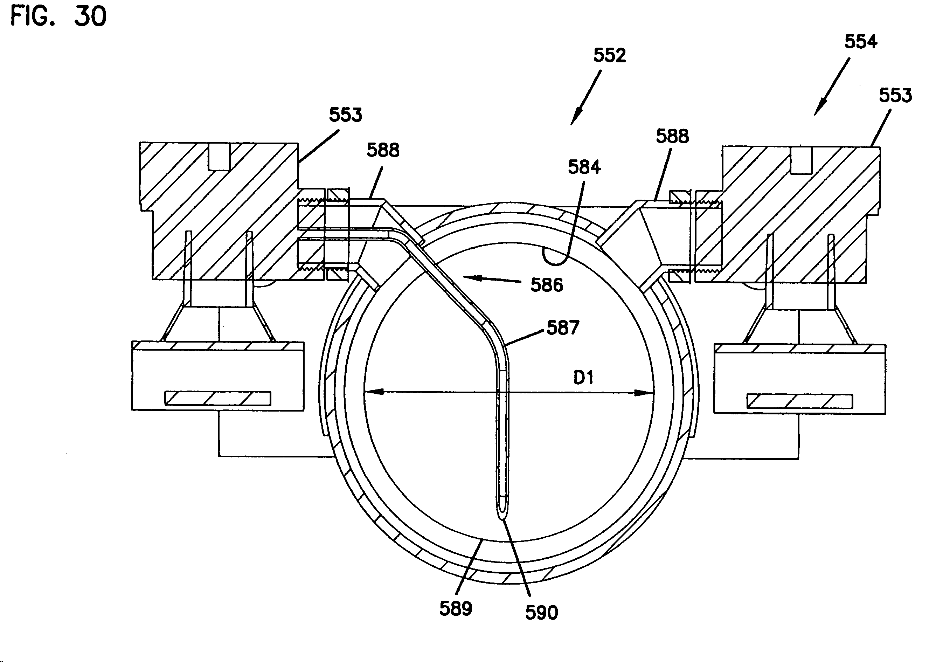

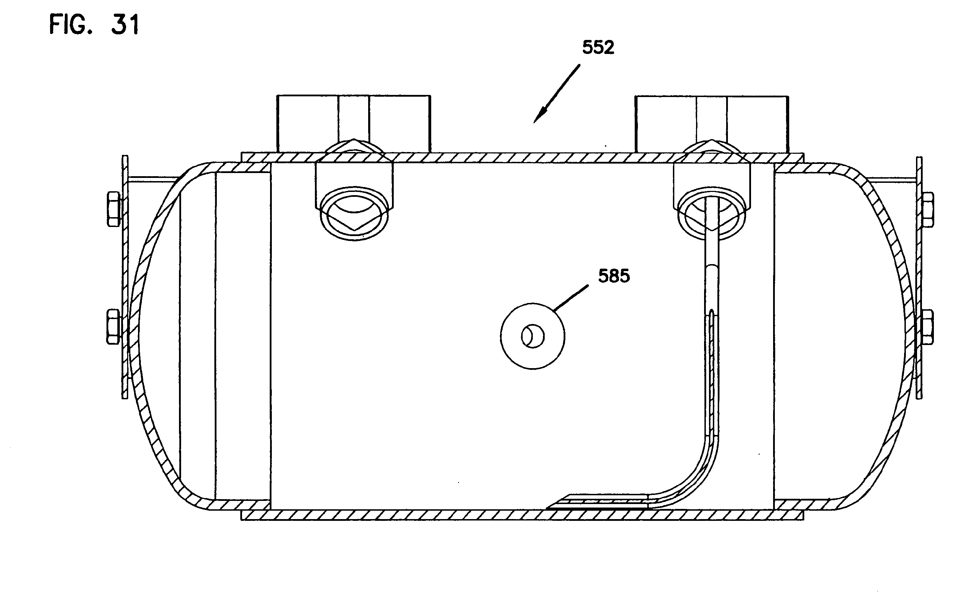

Attention is directed to Figs. 28-31. Fig. 28 is a schematic, perspective view of an example embodiment of a charge tank 552 useable as the tank 152 in the assembly of Fig. 10. Fig. 29 is a schematic, top plan view of the charge tank 552. Fig. 30 is a schematic, cross-sectional view of the charge tank 552 of Fig. 29, taken along line 30-30. Fig. 31 is a schematic, cross-sectional view of the charge tank 552 of Fig. 29, taken along line 31-31.

### 1. The Control Logic and Programming

In this section, some preferred control logic and programming logic for operation of the pulse cleaning system 154, Fig. 6, is provided. From the principles described in U.S.S.N. 09/325,697, a variety of control systems can readily be designed. The particular examples provided herein are intended as examples. It will be apparent that the operation of the pulse cleaning system 154 can be accomplished with conventional electronic system techniques.

Referring to Fig. 6, the control system selected will in part be defined by the restriction down-stream of the V-packs 94, 95 relative to ambient pressure. The restriction is equal to the pressure differential, or drop, across the V-packs 94, 95 plus the inlet static pressure losses. By the term "pressure differential," it is meant the difference in pressure up-stream of the V-packs 94, 95 versus the pressure down-stream of the V-packs 94, 95, i.e., the pressure in the clean air plenum 99 of the V-packs 94, 95. This restriction provides a relative measure of the efficiency of the operation of the V-packs 94, 95. As the V-packs 94, 95 become occluded with particulate matter, the restriction for the V-packs 94, 95 increases. The air pressures are typically measured using air pressure measuring devices commonly known.

In alternative embodiments, the clean air pressure may be measured anywhere down-stream of the V-packs 94, 95, for example in the clean air plenum 99 of the V-packs 94, 95. The ambient air pressure may be measured any where up-stream of the V-packs 94, 95, for example outside of the housing 20.

In the particular embodiment illustrated, the control system activates a cleaning cycle when the restriction down-stream of the V-packs 94, 95 reaches a particular level. With typical equipment such as heavy haul trucks, it is generally considered important by the original equipment manufacturers that the restriction for the entire air cleaner assembly 1 not exceed approximately 25 inches (64 cm) of water. In general, through empirical observation, it has been determined that the pulse cleaning system 154 should preferably be activated when a restriction is measured of preferably between 16 and 20 inches (41-51 cm) of water, and most preferably about 16 inches (41 cm) of water. A reason for this is that if the pulse cleaning system 154 is prevented from operation until the restriction reaches 25 inches (64 cm) of water, the pulse cleaning system 154 will be less efficient in refurbishing the associated V-packs 94, 95 for relatively long operation. Alternately stated, in general, the pulse cleaning system 154 does not remove all particulate material from the associated V-packs 94, 95. Thus, with repeated cycles, for example 10 cycles, the ability of the pulse jet cleaning system 154 to maintain operation of the V-packs 94, 95 below the overall restriction of about 25 inches (64 cm) of water is reduced. In general, it is believed that when the pulse cleaning system 154 can no longer keep the restriction below about 20 inches (51 cm) of water, change-out of the associated V-packs 94, 95 is desirable.

In general, it will also be preferred to actuate the pulse valves 153 to cause the pulse jet cleaning to occur, when the engine system is not under significant load and the airflow through the assembly 1 is relatively low. Altemately stated, for example, when the equipment is a vehicle, it will be preferred that the pulse jet cleaning system 154 be actuated to clean the V-packs 94, 95 when the vehicle is in neutral and the engine is in idle, or at least when the engine is operating at a relatively low rpm (1500 rpm or less). In general, preferred logic control systems will monitor engine rpm, with respect to operation. Thus, determining whether the engine is in a "idle" condition or some other condition for operation, or prohibiting operation, will typically turn on determination of the engine rpm. A reason for this is when the engine is under significant load demands, the air flow demands are substantially greater. Since the normal engine air flow works in the opposite direction of the pulse cleaning system 154, it will in general be harder to clean, and the cleaning will be less effective, when the engine is under significant load rather than when the engine is at or near idle.

In some instances, however, if a significant amount of time (10 minutes or more) has elapsed and the engine idle (or low rpm) condition has not occurred, it may be desirable for the control system to have an "override" that will cause the pulse cleaning to occur in spite of the fact that the engine idle (or low rpm) condition has not been reached.

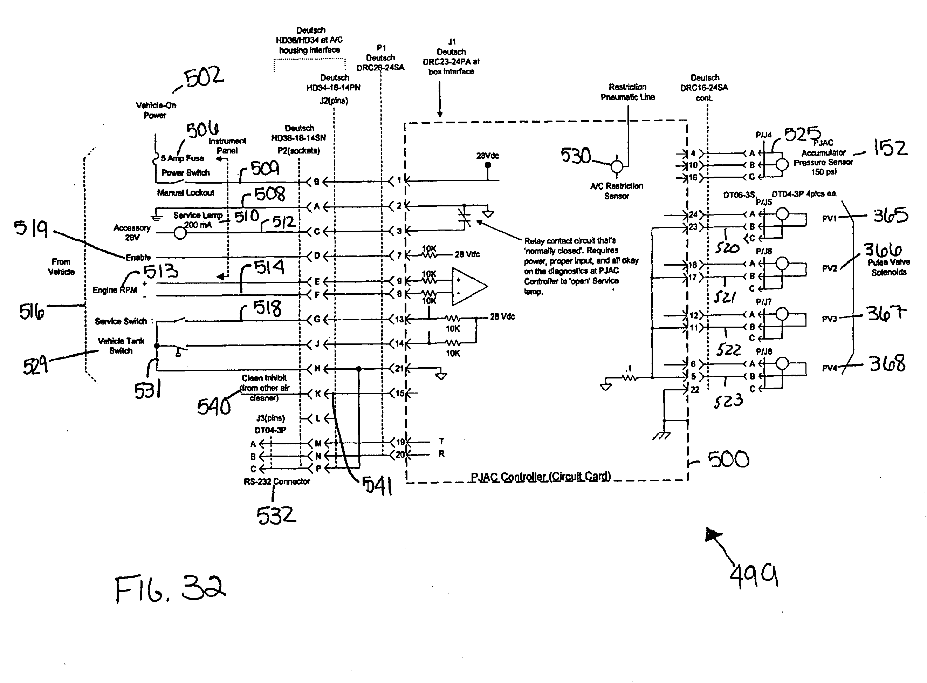

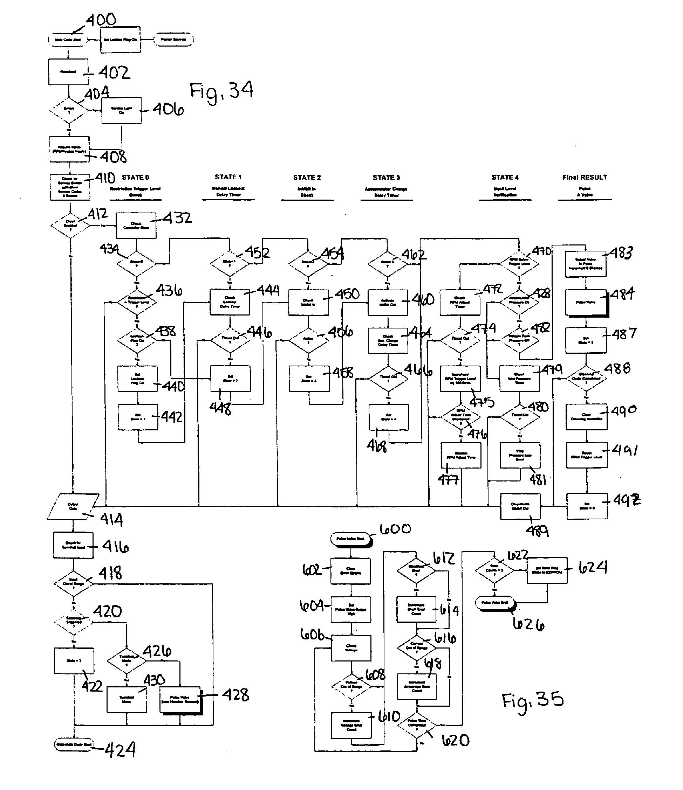

Given the above observations, a preferred logic control system is suggested. Attention is directed to Fig. 32. Preferably, the logic control system 499 would be in accord with the reasoning of the flow chart illustrated in Fig. 34. Still in reference to Fig. 32, in general, the intent of the logic control system 499 is to optimize the cleaning of the V-packs 94, 95 at the lowest engine air flow (by sensing rpm). However, at the end of a cleaning time period, even if the rpm is higher, the system 499 will continue regardless to prevent abnormally high restrictions across the V-packs 94, 95. Preferably, the logic control system 499 receives signals from the vehicle regarding the engine speed, vehicle tank pressure switch, the service switch, and the enable switch. The logic control system 499 also receives signals for the accumulator tank pressure and the air cleaner restriction. The logic control system 499 systematically fires to clean the V-packs 94, 95, based on these inputs.

Fig. 32 is an electrical schematic generally depicting the interfaces between the control system 499, the vehicle, and the air cleaner 1, Fig. 1. In general, the system 499 is controlled by a controller 500. Preferably, the controller 500 located within the housing 20, Fig. 20. In some instances, the controller 500 might be positioned outside of the housing 20, for example, in the vehicle itself. In other instances, the control logic of the controller 500 might be in a part of the vehicle's engine management system.

The controller 500 is in electrical communication with an instrument panel 502 of the vehicle. Preferably, the controller 500 receives power through a first electrical connection 504, for example wires. Preferably, the electrical connection is a male Deutsch HD34-18-14PN. Of course, any suitable connector could be used. The first electrical connection 504 passes through a fuse 506, typically 5 amps (18,000 coulombs). The fuse 506 protects the controller 500 from high amperage that may damage the controller 500 or wires. A second electrical connection 508 provides for the controller's 500 return current. Preferably, the controller 500 draws power from the vehicle's 24 volt dc power supply at a rate of 0.1 amperes (360 coulombs) during operation. When a pulse valve fares, the current increases to about 0.5 amperes (1800 coulombs) for about 0.1 seconds. Preferably, there is a voltage spike protection on the electrical inputs to prevent damage to the input circuits of the controller 500. The inputs are voltage clamped at 5 volts (0.02 statvolts) and the current is limited with a 470 ohm (470 ohm) resistor or greater. The logic circuitry operates from a 5 volt (0.02 statvolts) supply that is regulated by a LM2940T-5.0.

In the particular embodiment illustrated and described, the controller 500 is electrically connected to a service lamp 510 via a third electrical connection 512. Preferably, the service lamp 510 is installed on the dash of the vehicle for an operator's inspection. Generally, when the air cleaner assembly 1 is malfunctioning, the service lamp 510 will illuminate, indicating to the operator that something is wrong with the air cleaner assembly 1.

In the particular embodiment illustrated and described, the controller 500 is also electrically connected to an engine rpm sensor 513 via electrical connection 514. The engine rpm sensor 513 allows the controller 500 to monitor the engine rpm. The controller 500 is electrically connected to a service switch 516 via electrical connection 518.

In the particular embodiment illustrated and described, the controller 500 is electrically connected to the pulse valves 365-368 via electrical connections 520, 521, 522, and 523, respectively. This allows the controller 500 to fire the pulsevalves 365-368 as appropriate. The controller 500 is also electrically connected to the charge tank or accumulator 152 via electrical connection 525, a restriction sensor 530, and the vehicle's air pressure tank 529 via electrical connection 531. The controller 500 is connected to a clean inhibit line 540 from another air cleaner controller via electrical connection 541. The clean inhibit line 540 is used when more than one air cleaner assembly 1 is configured on one vehicle. The controller 500 is also connected to an enable signal 519. The enable signal 519 is used to enable the pulsing operation or to disable the pulsing operation from the vehicle.

In the particular embodiment illustrated and described, the controller 500 includes an interface port 532. In one embodiment this interface is an RS-232 interface. This port 532 allows an operator interface, for example to a computer, to modify the logic control of the control system 499 by the operator or to receive output from the controller 500.

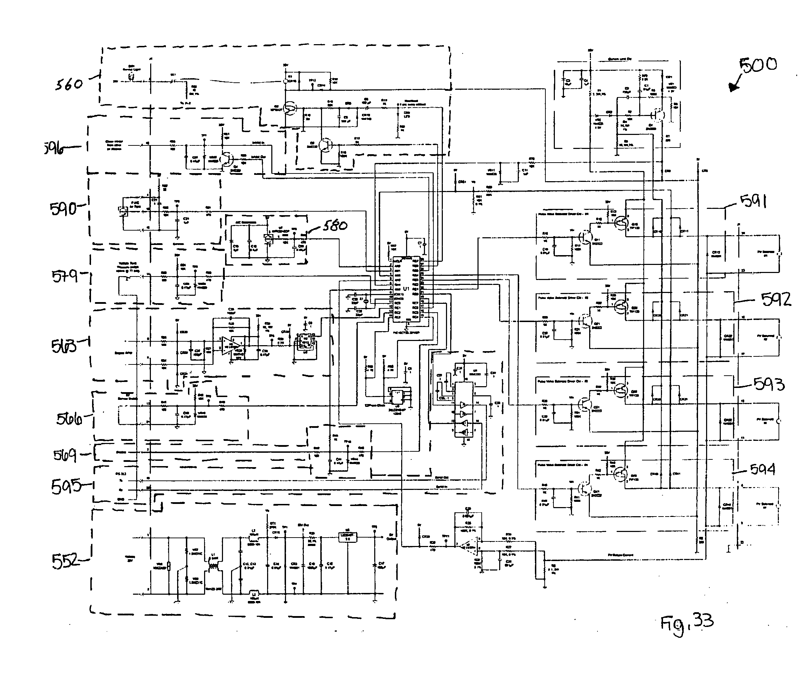

Attention is directed to Fig. 33. Fig. 33 is an electrical schematic generally depicting greater detail of an example embodiments of the controller's 500 interface with the rest of the control system 499 illustrated in Fig. 32. Module 560 illustrates the interface with the service light 510, Fig. 32. Module 596 illustrates the interface with the clean inhibit line 540, Fig. 32. Module 590 illustrates the interface with the charge tank 152, Fig. 32. Module 580 illustrates the interface with the restriction sensor 530, Fig. 32. Module 579 illustrates the interface with vehicle pressure tank 529, Fig. 32. Module 563 illustrates the interface with the engine rpm sensor 513, Fig. 32. Module 566 illustrates the interface with the service switch 516, Fig. 32. Module 569 illustrates the interface with the enable signal 519, Fig. 32. Module 595 illustrates the interface with the RS-232 port 532, Fig. 32. Module 552 illustrates the interface with the vehicle instrument panel 502, Fig. 32, for vehicle electrical 24 volt dc power. Modules 591, 592, 593, 594 illustrate the interfaces with the pulse valves 365, 366, 367, 368, respectively.

Attention is directed to Fig. 34. Fig. 34 is a flow chart illustrating the preferred logic operation of the control system 499, Fig. 32. Referring now to Fig. 34, the logic control begins at block 400. At block 402, the controller 500 starts-up and sends electrical pulses, or a heart beat, to the module 560, Fig 32, providing an indication that the controller 500 is working. At block 404, the controller 500 performs a system check for errors. For example, if the heartbeat is not received because of an in operative controller 500, the service light 510, Fig. 32, is turned on at block 406. If no error is detected, at block 408 the controller 500 acquires inputs from the equipment, such as the rpm of the engine. At block 410, the controller 500 checks the service switch 516 activation, Fig. 32, any service codes received during the last operation, and the enable signal. At block 412, the controller 500 determines if the enable signal 519, Fig. 32, is active.

If the enable signal 519 is inactive, the controller 500 outputs data at block 414 to a RS-232 interface port 532, Fig. 32, which may be connected to another computer. At block 416, the controller 500 checks for any terminal input from an operator interface, such as a computer connected to the RS-232 interface port 532. At block 418, the controller 500 determines if the input received from the RS-232 interface port is out of range. For example, the software loaded on the controller may be menu-driven having six menu choices. If a #7 is received, the input is out of range. If the input is not out of range, the controller 500 determines at block 420 if the cleaning cycle has been triggered. At block 422, the cleaning cycle has been triggered, the controller 500 changes a state flag from 0 to 2 and returns to block 400 via block 424. If the cleaning cycle has not been triggered, the controller 500 at block 426 determines if the logic is a terminal mode, i.e., a computer is connected to the RS-232 port. If not, a pulse valve is fired corresponding to a number input from the RS-232 port at block 428. For example the numbers 1-4 may correspond to pulse valves. If 1 is pressed, the controller 500 fires the first pulse valve at block 428. If the system 429 is in a terminal mode, the controller 500 enters the terminal menu at block 430. The logic then proceeds to block 424.

Returning to block 412, if the enable signal 519, Fig. 32, is active, the controller 500 checks the controller 500 state at block 432. At block 434, the controller 500 determines if the state is equal to 0. If the state is equal to 0, at block 436, the controller 500, or a pressure drop component of the controller 500, determines if the restriction down stream of the V-packs 94, 95, Fig. 6, is greater than a threshold restriction, for example 16 inches (41 cm) of water. If the restriction is not greater, the logic control proceeds to block 414.

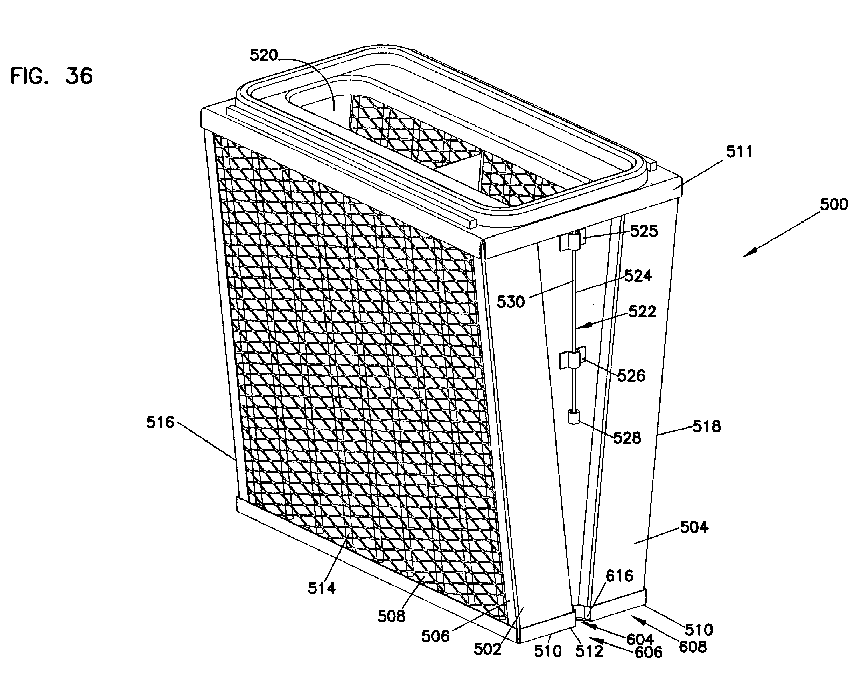

If the restriction is greater, the controller 500 determines if the lockout flag is on at block 438. This flag is set on at the application of power to the controller 500 or at vehicle start-up at block 628, Fig. 35. If the lockout flag is on, block 440, the controller 500 sets the lockout 516 to off. At block 442, the controller 500 changes the state to 1. At block 444, the controller 500 checks a lockout delay timer. For example, this timer may not allow pulsing for two minutes, after a restriction greater than the threshold restriction is detected. At block 446, the controller 500 determines if the delay timer has timed out, or for example, the two minutes is up. This is a safety device to prevent pulsing during servicing. If the delay timer has not timed out, logic control proceeds to block 414. If the delay timer has timed out, the controller 500 sets the state to 2 at block 448. Flow proceeds to block 450 where the controller 500 checks for an inhibit flag.

Referring back to block 438, if the lockout delay is not on, the controller 500 proceeds to block 448. This is the normal logic path. The logic control proceeds as described above. Referring back to block 434, if the state does not equal 0, the controller 500 determines if the state is equal to 1 at block 452. If the state is equal to 1, flow proceeds to block 444 and the logic control proceeds as described above. If the state is not equal to 1, the controller 500 determines if the state is equal to 2 at block 454.

Referring to block 450, logic flow proceeds to block 456 where the controller 500 determines if the inhibit line is active from another controller. If the inhibit line is active, flow proceeds to block 414. If the inhibit line is not active, the controller 500 sets the state to 3 at block 458. At block 460, the controller 500 activates the inhibit out. In some applications multiple air cleaners, such as the air cleaner 1 of Fig. 1, may be utilized on one vehicle. For example, in a two air cleaner, two controller environment, the controller 500 sends an inhibit signal to the other controller to prevent the other controller from firing a pulse valve when the controller 500 is firing a pulse valve. This ensures maximum air pressure for each pulse valve firing. Also, it prevents overloading the vehicle's air supply system.

Referring back to block 454, if the state does not equal 2, the controller 500 determines if the state is equal to 3 at block 462. If the state is equal to 3, flow proceeds to block 460. At block 464, the controller 500 checks a charge tank delay timer. For example, a timer may be set for 10 seconds to allow the charge tank 152, Fig. 32, to refill prior to the next pulse valve firing. At block 466, the controller 500 determines if the accumulator charge delay timer is timed out, i.e., ten seconds has passed. If not, logic flow proceeds to block 414. If the accumulator charge delay timer has timed out, the controller 500 sets the state to 4 at block 468.

At block 470, the controller 500, or an engine load component of the controller 500, determines if the rpm is below a threshold rpm, for example 1200 rpm via the rpm sensor 513, Fig. 32. Referring back to block 462, if the state does not equal 3, flow proceeds to block 470. If the rpm is not below the threshold level, the controller 500 checks an rpm adjust timer at block 472. For example, the rpm adjust timer may be used to increase the rpm threshold trigger level over time. If an amount of time has elapsed, i.e., ten minutes, the controller 500 will adjust the threshold rpm level. At block 474, the controller 500 determines if the rpm adjust timer has timed out. If not, flow proceeds to block 414. If the adjust timer has timed out, the controller 500 increments the rpm threshold level by 100 rpm at block 475, for example, the threshold rpm is now 1300 rpm. At block 476, the controller 500 determines if the rpm adjust time should be shortened. For example, after the initial 10 minutes, an rpm adjust time may be shortened to 5 minutes. If yes, flow proceeds to block 414. If not, the controller 500 shortens the rpm adjust time at block 477 to, for example, 5 minutes. Logic flow proceeds to block 414.

Referring back to block 470, if the rpm is below the threshold level, the controller 500, or an accumulator pressure component, determines if the charge tank 152, Fig. 32, has sufficient pressure at block 478, for example 90 psi. If not, flow proceeds to block 479. At block 479, the controller 500 checks a low pressure timer. For example, the controller 500 may wait 30 minutes for the charge tank to fill-up to 90 psi. At block 480, the controller determines if the low pressure timer has timed out, i.e., 30 minutes has passed. If not, logic flow proceeds to block 414. If the timer has timed-out, the controller 500 turns on the service light 510, Fig. 32, at block 481. Logic flow proceeds to block 414.

Referring back to block 478, if the accumulator has sufficient pressure, the controller 500, or a vehicle pressure component of the controller 500, determines at block 482 if the vehicle pressure tank is sufficient pressure, for example 95 psi. If not, flow proceeds to block 479. If the vehicle pressure tank is sufficient, the controller 500, or a pulse firing component of the controller 500, selects the pulse valve to pulse at block 483. At block 484, the controller 500 pulses the valve. Attention is directed to Fig. 35. Fig. 35 is a flow chart illustrating a more detailed, preferred logic of the firing of a pulse valve. At block 600, the firing sequence begins. While firing the pulse valve, at block 602, the controller 500 clear all error counts. At block 604, the controller 500 sets the pulse valve output high. At block 606, the controller 500 checks the voltage. At block 608, the controller 500 determines if the voltage is too low or high. If the voltage is too low or high, the controller increments a voltage error count at block 610. Logic flow proceeds at block 612. Referring back to block 608, if the voltage is correct, at block 612, the controller 500 checks for an electrical short. If there is an electrical short, the controller at block 614 increment a short error count. Logic flow proceeds to block 616. If there is not an electrical short, at block 616, the controller determines if the current is too low or too high. If so, at block 618, the controller 500 increments the amperage error count. Logic flow proceeds to block 620. If the current is correct, at block 620, the controller checks if the pulse time is completed. If not, logic flow proceeds to block 606. Thus, during firing of a pulse valve, the controller 500 continually monitors the checks described above. If the pulse time is completed, at block 622, the controller determines if the error counts are less than 3. If not, at block 624, the controller sets the error flag and writes to the EE PROM. Logic flow proceeds to block 626. If yes, the pulse valve firing is completed at block 626.

Referring back to block 484, Fig. 34, at block 487, the controller 500 sets the state to 2. At block 488, the controller 500 determines if the cleaning cycle has been completed. If the cleaning cycle has not been completed, the controller 500 deactivates the inhibit at block 489. For example, have 40 pulses been fired. If the cleaning cycle has been completed, the controller 500 clears the cleaning variables at block 490. At block 491, the controller 500 resets the rpm threshold level back to the initial threshold level, i.e. 1200. At block 492, the controller 500 sets the state to 0. Logic flow proceeds to block 489.

In general, the controller 500 monitors the restriction down stream of the V-packs 94, 95. When the restriction down stream of the V-packs 94, 95 is greater than 16 inches (41 cm) of water, the clean cycle is enabled. It is generally preferred that once the clean cycle is enabled, that the cleaning cycle be completed within a predetermined amount of time. This is so that the cleaning cycle is completed before the V-packs 94, 95 reach a level of pressure differential that cannot be cleaned by the pulse system 499, as previously described herein. This predetermined time period is empirically determined based on field tests. In general, the amount of time will be greater than 3 minutes, preferably between 20 minutes and 120 minutes, and most preferably between 30 minutes and 90 minutes.

The controller 500 monitors the engine speed. The controller 500 determines if the engine speed is less than a first speed, or in other words, in a low idle condition for example, 1200 rpms. If the engine speed is less than 1200 rpms, the controller 500 determines if the air pressure in the charge tank is greater than 90 psi. If the air pressure is greater than 100 psi, the controller 500 checks the vehicle tank pressure. If the vehicle tank pressure is greater than 90 psi, a pulse valve is fired. When the cleaning cycle is started, a timer is set, for example at 10 minutes. The controller continues to monitor the rpms during the 10 minutes. If after 10 minutes the cleaning cycle has not been completed, the controller 500 increments the rpm by 100 to 1300 rpm. The timer is reset for 5 minutes. If the cleaning cycle is not completed during the next 5 minutes the controller 500 again increments the rpm to 1400. Thus continues until a complete cleaning cycle, for example 4 valves, ten pulses each, has been completed.

In general, a complete cleaning cycle may be any number of pulse valve firings. The number of pulse valve firings needed to clean the V-packs 94, 95 is empirically determined from field tests and will vary under varying conditions. Preferably, the cleaning cycle will comprise at least 4 pulse valve firings, more preferably between 10 and 80, and most preferably 40 pulse valve firings. As previously discussed, the amount of time that elapses, between the start of the cleaning mode and the completion of the cleaning cycle, varies.

In one particular example, the amount of time that elapses between the start of the cleaning mode and the completion of the cleaning cycle is 60 minutes and the required pulse valve firings is 40. In addition, the threshold rpm is 1200 rpm, and the rpm increment is 100 rpm.

In alternative embodiments, any number of pulse valves firings, engine speeds, elapsed time, number of increments (both engine speed and elapsed time) may be utilized in accordance with the principles described.

The logical operations of the various embodiments described herein can be implemented (1) as a sequence of computer implemented steps or program modules running on a computing system and/or (2) as interconnected logic circuits or circuit modules within the computing system. The implementation is a matter of choice dependent on the performance requirements of the computing system implementing the invention. Accordingly, the logical operations making up the embodiments of the present invention described herein are referred to variously as operations, steps, engines, blocks, or modules.

### II. Comments on Disclosure of U.S. Patent Application Serial No. 09/325,697

In the disclosure of U.S. Patent Application Serial No. 09/325,697 subsection C, the media 200 of the V-Packs 94, 95 is discussed. In particular, a deposit or layer of polymeric fiber material, or "fine fiber," is discussed. The amount of fine fiber deposited is a matter of design choice for a given application. The method used will be a matter of choice based upon such factors as cost, availability of equipment, and related commercial variables. One usable method is disclosed in U.S. Patent No. 4,650,506, issued to Barris et al.

### III. Additional Disclosure Relating to an Interlock Arrangement

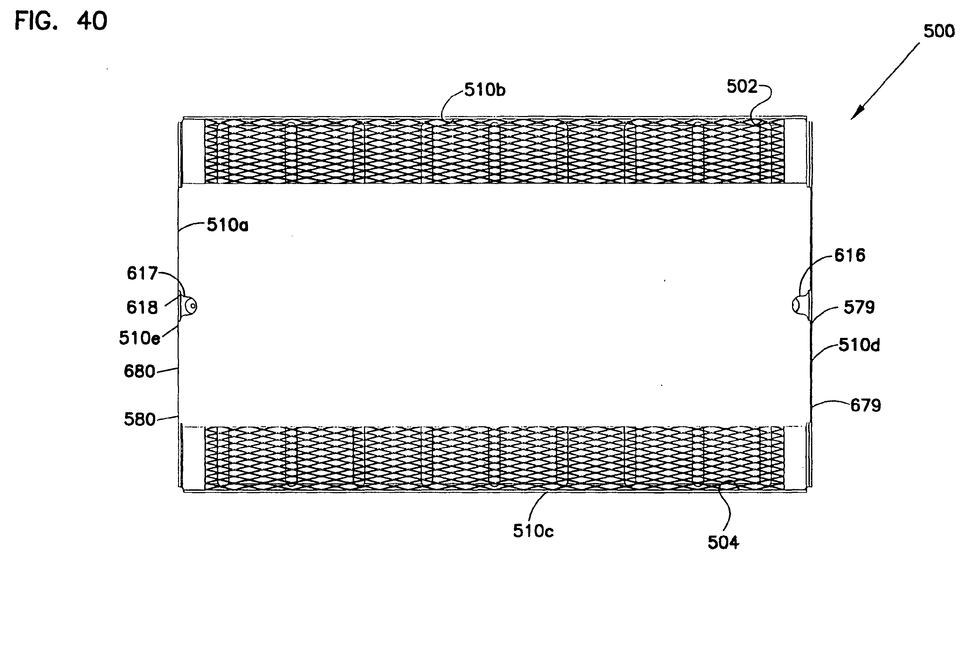

Attention is now directed to Figs. 36-43. These figures were not present in the priority application U.S.S.N. 09/325,697. In Fig. 36, an example embodiment of a V-pack filter 500 is depicted. The V-pack filter 500 comprises first and second panels 502, 504, with media 508 positioned therein, and an outer frame construction 506. The frame construction 506 includes first and second frame structures, or endcaps, 510, 511. The first frame structure 510 seals a side, or end, orientated as a bottom 512 of the V-pack filter 500, forcing air through the first and second panels 502, 504. Attention is directed to Fig. 40. Fig. 40 is a bottom, plan view of the V-pack 500. The first frame structure 510 includes a bottom portion 510a. The bottom portion 510a includes first and second side portions 510b, 510c and first and second end portions 510d, 510e extending therefrom. In the particular arrangement shown, the first and second side portions 510b, 510c and first and second end portions 510d, 510e are approximately perpendicular to the bottom portion 510a, as illustrated in Figs. 36 and 40.

Referring back to Fig. 36, in the particular embodiment depicted, the media 508 of the first and second panels 502, 504 is pleated and oriented such that when the V-pack filter 500 is positioned in the vertical orientation of Fig. 6, the pleats 514 extend vertically. Having vertical pleats is typically preferred because it aids in knocking the dust of the V-pack filter 500 during a pulse cycle.

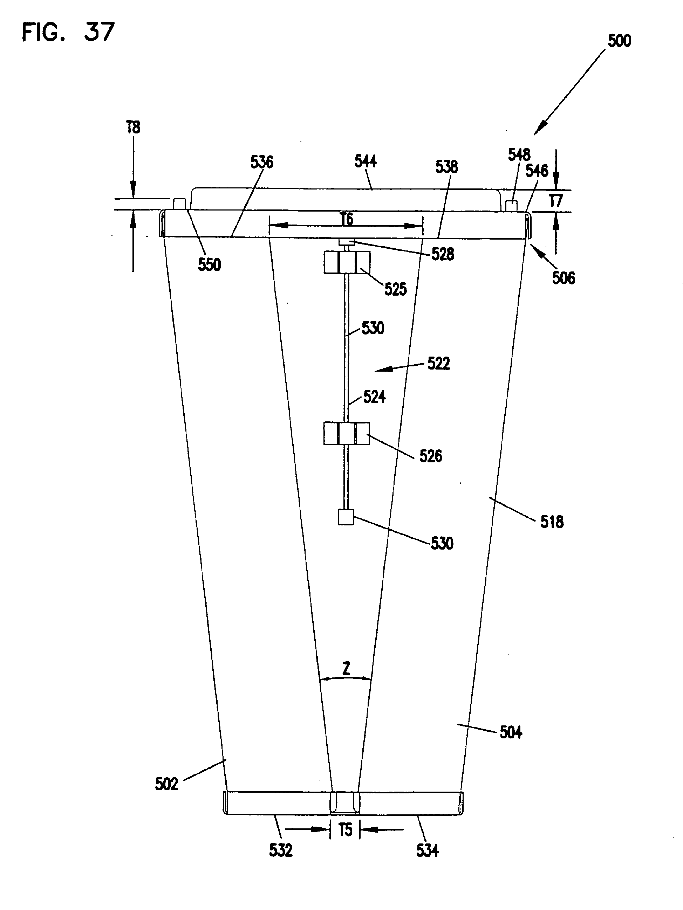

The V-pack filter 500 includes first and second opposite end panels 516, 518. The first and second end panels 516, 518 close ends of the clean air plenum 520 when the V-pack 500 is operably mounted, or positioned. By the term "operably mounted," it is meant that the V-pack filter 500 is in sealing engagement with a housing, such as the housing 1 shown in Fig. 6. Attention is directed to Fig. 37. Fig. 37 is a side, elevational view of the V-pack 500. For convenience, one of the end panels 518 is shown having a handle construction 522 positioned thereon. The handle construction 522 is convenient for mounting and dismounting the V-pack filter 500 and also for carrying the V-pack filter 500. It should be noted that the other end panel 516 could also have a handle construction or that neither end panel 516, 518 would have a handle construction.

Attention is directed to Fig. 37. Fig. 37 is a side elevational view of the V-pack filter 500 of Fig. 36. Preferably, the handle construction 522 is secured in extension between first and second brackets 525, 526. The handle construction 522 comprises an extension of wire 524 having first and second end stops 528, 530 thereon. When a central portion 530 of the flexible wire 524 is pulled, the handle construction 522 will bow outwardly until the end stops 528, 530 engage the brackets 525, 526, respectively.

The first and second panels 502, 504 are oriented in a V-shape, as shown. The first panel section 502 has first and second ends 532, 536. Likewise, the second panel section 504 has third and fourth ends 534, 538. The first end 532 of the first panel section 502 and the third end of 534 of the second panel section 504 are oriented either adjacent one another or closely spaced and having a first distance T5 between them. The second end 536 of the first panel section 502 and the fourth end 538 of the second panel section 504 are spread apart from one another having a second distance T6 between them. Preferably, the second distance T6 is greater than the first distance T5. That is, preferably the panels 502, 504 form a V-shape, most preferably having a filter angle Z between the panels 502, 504, of at least about 5°, preferably within the range of 10 to 25°, most preferably about 13 to 17°.

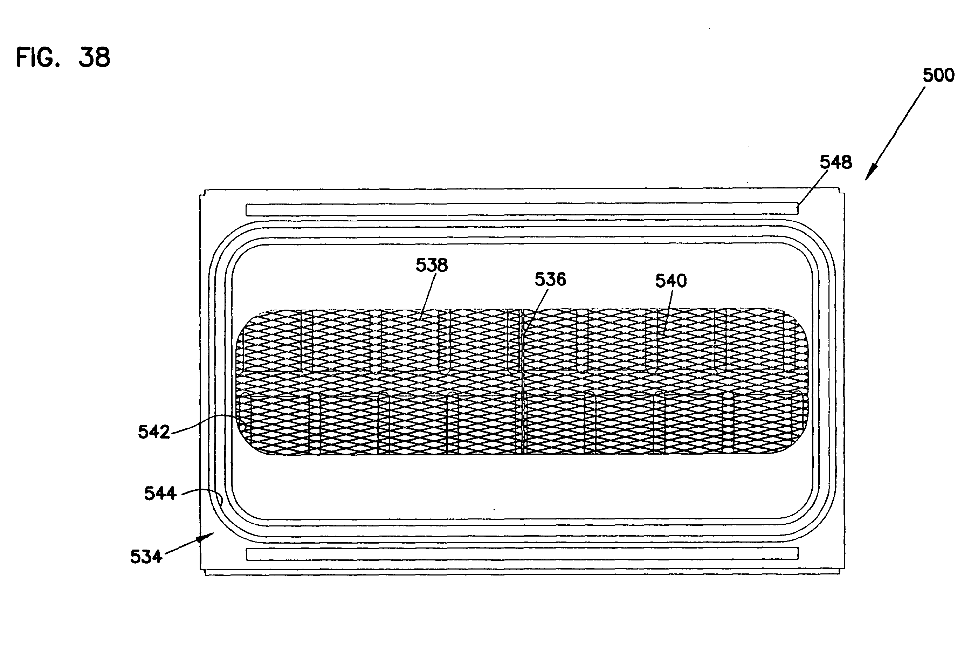

Attention is directed to Fig. 38. Fig. 38 is a top, plan view of the V-pack filter 500 of Fig. 36. The V-pack filter 500 preferably includes a central spacer 536 separating the V-pack filter 500 into separate regions 538, 540. In use, a separate one of nozzles, for example the nozzles 162-165 of Fig. 8, is directed into each region 538, 540. The central spacer 536 directs the air from each nozzle to an associated region 538, 540 of the V-pack filter 500 to provide directed air sufficient to clean the exterior portions of the panels 502, 504.

The air flow exit end 542 of the V-pack filter 500 includes a sealing arrangement 543 thereon. Preferably, the sealing arrangement 543 includes a seal ring or gasket 544 having a first projection thickness T7, Fig. 37. Referring back to Fig. 37, when the V-pack filter 500 is operatively positioned within an air cleaner assembly, such as the assembly 1 of Fig. 7, the seal arrangement 543 is pressed between an end 546 of the V-pack filter 500 and a tube sheet, such as the tube sheet 250 of Fig. 7. In general, the seal arrangement 543 is sized to be sealingly positioned around a aperture, such as the aperture 100 of Fig. 7, in the tube sheet.

Preferably, the V-pack.filter 500 also includes a hard stop arrangement 548 thereon having a second projection thickness T8 less than the first thickness T7. Preferably the hard stop arrangement 548 is configured to extend the second thickness T8 of at least about 0.1 inches (2.5 mm), typically about 0.2 inches (5.1 mm) to 0.3 (7.6 mm) inches, above (or outwardly from) a top surface 550 of the V-pack filter frame construction 506. Also, preferably the seal arrangement 543 is selected such that, prior to being pressed, the seal arrangement 543 extends at least about 0.1 inches (2.5 mm) to 0.3 inches (7.6 mm) beyond the hard stop arrangement 548. In other words, the thickness T7 of the seal arrangement 543 is at least about 0.1 inches (2.5 mm) to 0.3 inches (7.6 mm) greater than the thickness T8 of the-hard stop arrangement 548. The hard stop arrangement 548 provides for a hard contact against the tube sheet as the V-pack filter 500 is moved into operable position. Preferably, the hard stop arrangement 548 comprises a metal such as steel. Most preferably, the gasket material is polyurethane, having a thickness of at least 0.40 inches (1 cm) in extension outwardly from the surface 550 of the. V-pack filter frame construction 506.

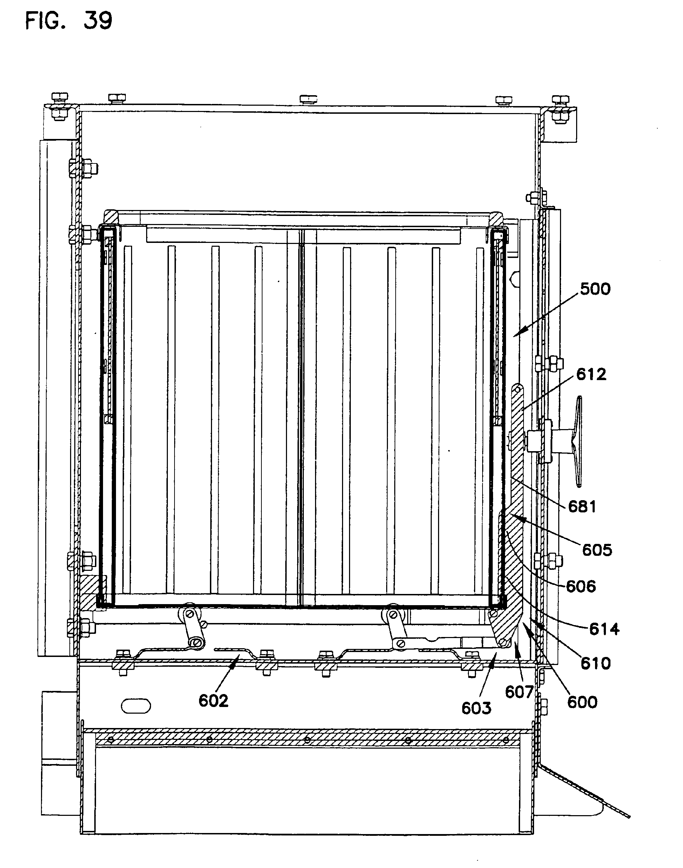

Referring now to Fig. 39, preferably, an apparatus 600 includes the V-pack filter 500 and a retention, or lift, mechanism 602. Preferably, the retention mechanism 602 moves the V-Pack filter 500 into its sealing, or operable, position around the aperture in the tube sheet. The retention mechanism 602 is analogous to the lift mechanism 280. Preferably, the apparatus 600 also includes a locking system, or interlocking arrangement, 603. The locking system 603 is constructed and arranged to help retain the V-pack 500 in its sealed, or operable, position, when the retention mechanism 602 is moved to a first raised, or locked. The locking system 603 also helps to center the V-pack filter 500 around the aperture 100 and to stabilize the V-pack filter 500 during operation. The locking system 603 also prevents inappropriate, i.e. parts not having the required performance characteristics, parts from being used in the apparatus 600.

Preferably, the locking system 603 includes first and second locking devices 604, 605, Figs. 36 and 39. Preferably, the first and second locking devices 604, 605 are constructed and arranged to interact with each other. Preferably, the locking system 600 includes a first, locked orientation and a second, unlocked orientation. In the first, locked orientation, the first and second locking devices 604, 605 interact with each other. By the term "interact," it is meant that the first and second locking devices 604, 605 engage each other sufficiently to prevent undesired movement of the V-pack filter 500. In the second, unlocked orientation, the first and second locking devices 604, 605 do not interact.

In one example embodiment, the V-pack filter 500 defines the first locking device 604, Fig. 36, while the retention mechanism 602 includes the second locking device 605, Fig. 39. Preferably, the first locking device 604 includes at least a first interlocking member, or structure, 606 and the second locking device 605 includes at least a first interlocking member 607. Preferably, the first locking member 604 is a female locking member 608 and the second locking member is a male locking member 610.

In the example embodiment illustrated in Fig. 36, the first frame structure 510 defines the female locking member 608. Preferably, the first end portion 510 of the first frame structure 510 defines a locking groove, cutout, notch, or receiver indent 616. In the example embodiment illustrated in Fig. 39, the retention mechanism 602 includes a control arm 612. Preferably, the control arm 612 includes the male locking member 610. Preferably, the male locking member is a locking rib or projection 614 extending from the control arm 612. The locking rib 614 extends or projects outwardly from the control arm 612 in the general direction of the V-pack filter 500 as illustrated in Fig. 39. Preferably, the locking groove 616 of the V-pack filter 500 is constructed and arranged to receive the locking rib 614 of the retention mechanism 602. The locking rib 614 fits within, engages, or interacts with the locking groove 616 of the V-pack filter 500. By the term "receive," it is meant that the locking rib and groove 614, 616 interengage with one another. By the term "interengage," it is meant that the interaction of the locking rib and groove 614, 616 is sufficient to prevent undesired movement of the V-pack filter 500 during operation. In other words, the locking rib and groove 614, 616 do not need to be frictionally engaged with one another but need only interact sufficiently to prevent substantial undesired movement of the V-pack filter 500.

When the V-pack filter 500 is placed in the housing, such as the housing 1 of Fig. 6, on the retention mechanism 602, the retention mechanism 602 is used to move the filter V-pack 500 into sealing engagement around the aperture and against the tube sheet. When the retention mechanism 602 is placed in its raised, or locked, orientation, the locking rib 614 of the retention mechanism 602 projects into the locking groove 616 of the V-pack filter 500. As such, the locking system 603 centers the V-pack and stabilizes it from undesirable misalignment.

Referring back to Fig. 40, it is noted that the first locking device 604 preferably also includes a second interlocking member 617 having a second locking groove 618, opposite the first locking groove 616. Each locking groove 616, 618 is being positioned at the ends 579, 580, respectively of the V-pack filter 500. The second locking groove 618 is analogous to the first locking groove 616. Preferably, the locking grooves 616, 618 are centered between the first and second panels 502, 504 of the V-pack 500. Preferably, in the particular embodiment illustrated in Fig. 40, the locking grooves 616, 618 are generally U-shaped having two filets. The center of the semi-circle portion of the u-shape of the lock grooves 616, 618 is preferably located inboard of the ends 579, 580 of the V-pack 500, at least 0.05 inches, preferably between 0.10 inches (2.5 mm) and 0.30 inches (7.6 mm), and most preferably about 0.18 inches (4.6 mm). Alternatively, a variety of shapes and sizes could be utilized for the locking grooves 616, 618.

It is noted that the second locking groove 618 of the first interlocking device 504 might interact with a third interlocking device (not shown) on the housing.

Referring back to Fig. 39, preferably, the locking rib 614 projects from a front face 681 of the control arm 612 at least 0.05 inches (1.3 mm) and preferably between 0.1 inches (2.5 mm) and 0.5 inches (1.3 cm). Alternatively, a variety of shapes and sizes could be utilized for the locking rib 614.

During interlocking of the locking rib 614 and the locking groove 616, the locking rib 614 extends generally into the locking groove 616 at least 0.05 inches (1.3 mm) and preferably between 0.1 inches (2.5 mm) and 0.5 inches (1.3 cm).

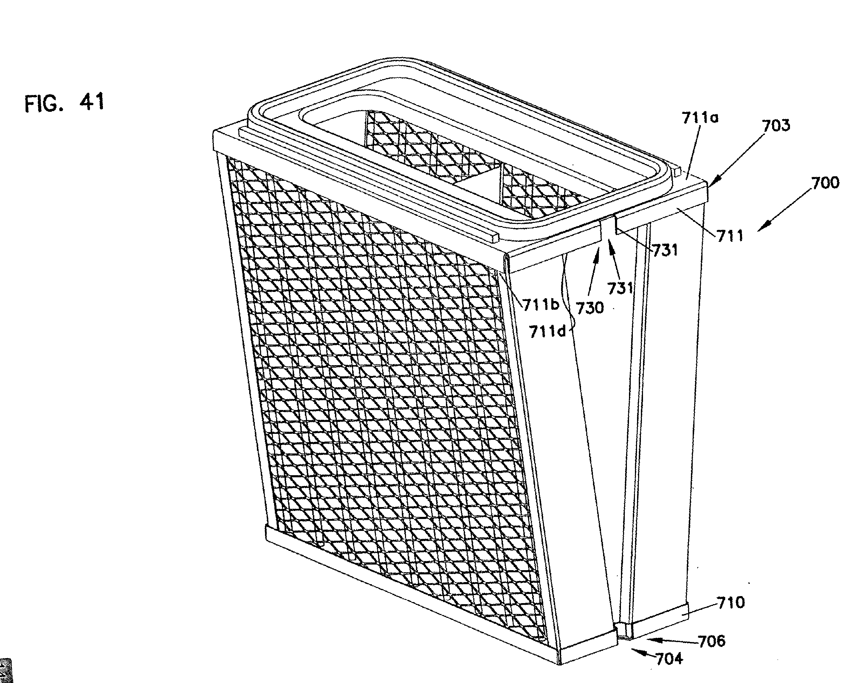

Attention is now directed to Fig. 41. Fig. 41 is a perspective view of another embodiment of a V-pack filter 700. Analogous to the V-pack filter 500 of Fig. 36, the V-pack filter 700 includes a frame construction 703 and a first locking device 704. The first locking device 704 includes a first interlocking member 706 and an opposite second interlocking member (not shown). In this embodiment, the first locking device 704 also includes a third interlocking member 730.

The frame construction 703 includes first and second frame structures 710, 711, analogous to the frame construction 506 of Fig. 36. The second frame structure 711 includes a top portion 711a. The top portion 711 a includes a first side portion 711b, a second side portion (not shown), a first end portion 711d, and a second end portion (not shown) extending therefrom. The first end portion 711d defines the third interlocking member 730. In particular, the third interlocking member 730 is a cutout, or notch 731 in the first end portion 711d. Preferably in this embodiment, the first locking device would also include a fourth interlocking member (not shown) opposite and analogous to the third interlocking member 730 in the second end portion (not shown).

Although not shown, in this embodiment, a retention mechanism includes a second interlocking device constructed and arranged to interact with the first interlocking device. In particular the locking rib, such as the locking rib 614 of the retention mechanism 602 of Fig. 39, extends to the top of the control arm, such as the control arm 612 of Fig. 39. This locking rib engages with the first interlocking member 706 and the third interlocking member 730.

It is noted that although not shown, the second and fourth interlocking members of the first interlocking device 704 might interact with a third interlocking device (not shown) on the housing.

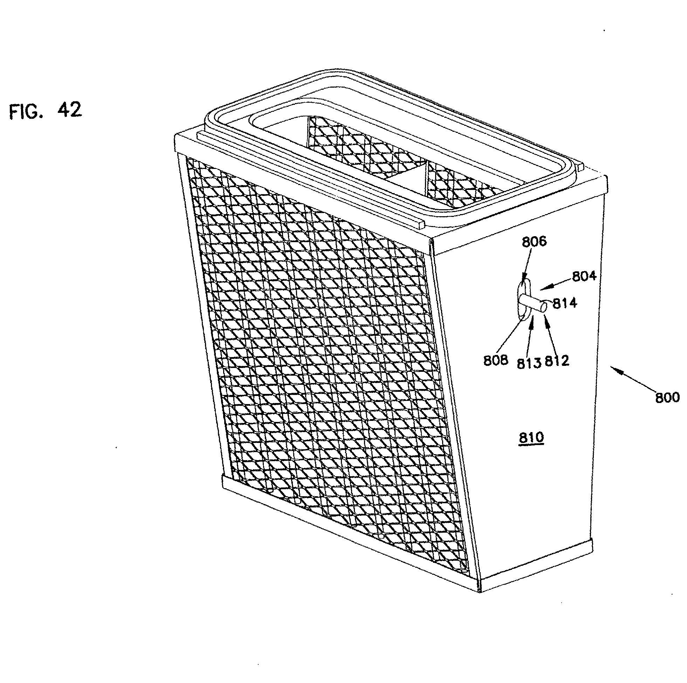

Attention is directed to Fig. 42. Fig. 42 is a perspective view of another embodiment of a V-pack filter 800. Analogous to the V-pack filter 500 of Fig. 36, the V-pack filter 800 includes a first locking device 804. The first locking device 804 includes a first interlocking member 806 and an opposite second interlocking member (not shown). In this particular embodiment, the first interlocking member 806 is a recess, cutout, or indent 808 in a side panel 810 of the V-pack filter 800. Or, in other words, the side panel 810 defines the indent 808.

The first locking device 804 is constructed and arranged to receive a second interlocking device 812. The second interlocking device includes a first interlocking member 813. In this particular embodiment , the first interlocking member 813 is a pin, or projection 814. The projection 814 might extend from a control arm of a retention mechanism, such as the retention mechanism 602 of Fig. 39. The projection 814 might also extend from a door, such as the access door 5 of Fig. 4. The first and second interlocking devices 804, 812 are constructed and arranged to interact with each other.

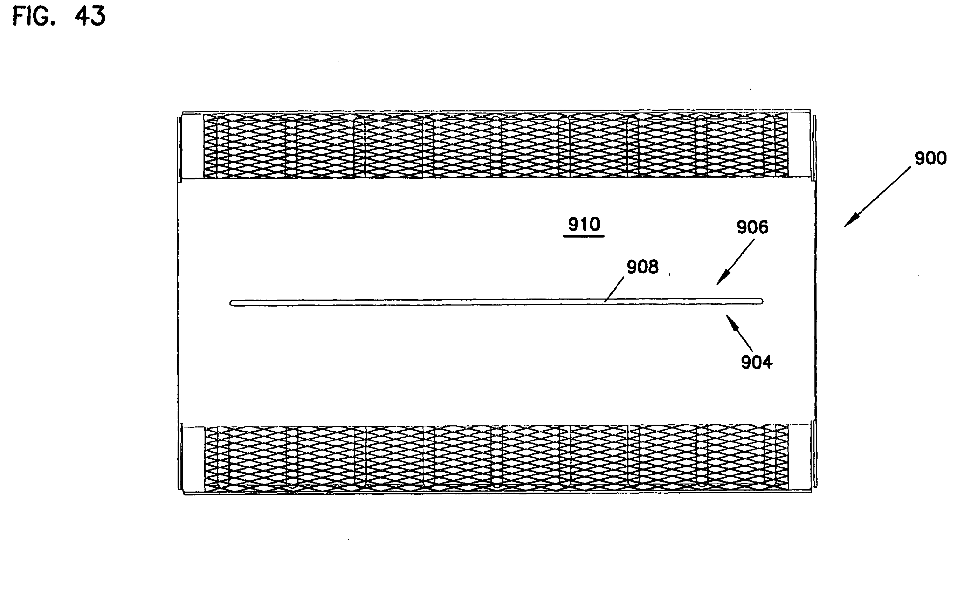

Attention is directed to Fig. 43. Fig. 43 is a bottom elevational view of another embodiment of a V-pack filter 900. The V-pack filter 900 includes a first locking device 904. The first locking device 904 includes a first interlocking member 906. In this particular embodiment, the first interlocking member 906 is a recess, cutout, or indent 908 in a bottom frame section 910 of the V-pack filter 900. Or, in other words, the bottom frame section 910 defines the indent 908.

The first locking device 904 is constructed and arranged to receive a second interlocking device (not shown). The second interlocking device includes a first interlocking member (not shown). The first interlocking member is a longitudinal projection, or bead, (not shown). The projection extends from the base structure of the retention mechanism, such as the retention mechanism 602 of Fig. 39. The first and second interlocking device 904 are constructed and arranged to interact with each other.

## Claims

1. A filter comprising:
(a) a frame construction (506) including a first frame structure (510) and a second frame structure (511);
(b) first and second panel sections (502,504) including filtering media mounted in extension between said first and second frame structures;
(i) said first panel section (502) having first and second ends (532,536), and said second panel section (504) having third and fourth ends (534,536);
(A) said first and third ends having a first distance therebetween;
(B) said second and fourth ends having a second distance therebetween, said second distance being greater than said first distance;
(ii) said first and second panel sections and said second frame structure defining an air flow aperture;
(c) a seal arrangement (543) circumscribing said air flow aperture (100) and projecting outwardly from said second frame structure
(i) said seal arrangement having a first thickness (T7); and
(d) a stop arrangement (548) projecting outwardly from said second end and having a second thickness (T8) that is less than the first thickness (T7).

2. A filter according to claim 1 further comprising:
said first frame structure defining a first receiver indent (616) oriented to receive a first interlocking member (614) of an assembly in which the filter is mounted in use.

3. A filter according to claim 2 wherein:
(a) said first frame structure (510) includes:
(i) a bottom portion (510a);
(ii) first and second end portions (510d, 510c) in extension from said bottom portion; and
(iii) first and second side portions (510b, 510c) in extension from said bottom portion; and
(b) said first end portion defining said first receiver indent (616).

4. A filter according to claim 3 wherein:
said first and second end portions and first and second side portions are perpendicular to said bottom portion.

5. A filter according to claim 2 or 3 wherein:
said first frame structure defines a second receiver indent (618), said second receiver indent being opposite said first receiver indent.

6. A filter according to claim 5 wherein:
said second end portion of said first frame structure defines said second receiver indent.

7. A filter according to claim 1 wherein:
said first receiver indent is U-shaped having two filets.

8. A filter according to claim 1 wherein:
said first seal arrangement includes a first gasket.

9. A filter according to claim 5 wherein:
said second receiver indent is U-shaped having two filets.

10. A filter according to claim 2 further comprising:
said first frame structure defining a second receiver indent oriented to receive a second interlocking member of the assembly in which the filter is mounted in use.

11. A filter according to claim 1 further comprising:
said second frame structure defining a third receiver indent.

12. A filter according to claim 12 further comprising:
said second frame structure defining a fourth receiver indent.

13. A filter according to claim 13 wherein:
(a) said second frame structure (711) includes:
(i) a top portion (711 a);
(ii) first and second end portions (711d) in extension from said top portion; and
(iii) first and second side portions (711b) in extension from said top portion;
(b) said first end portion defining said third receiver indent (730).

14. A filter according to claim 14 wherein:
said second end portion defines said fourth receiver indent.

15. A filter according to claim 1 wherein the stop arrangement comprises a hard stop arrangement (548) comprising metal.

16. A filter according to claim 16 wherein:
said metal comprises steel.

17. A filter according to claim 1 wherein:
said second thickness (T8) is at least 2,5 mm (0.1 inches).

18. A filter according to claim 1 wherein:
said first thickness (T7) is at least 10,16 mm (0.4 inches).

19. A filter according to claim 1 wherein:
said first thickness (T7) is at least about 2,5 to 7,6 mm (0.1 inches to 0.3 inches) greater than said second thickness (T8).

20. A filter according to claim 1 wherein:
said seal arrangement comprises polyurethane.

21. A filter assembly (1) comprising:
(a) a housing defining a first chamber (21) and a second chamber (22);
(b) a first stage air cleaner (24) positioned in the first chamber;
(i) said first stage air cleaner including at least a first filter according to claim 2 through which air to be filtered is directed during use;
(c) a second stage air cleaner (25) positioned in the second chamber;
(i) the second stage air cleaner including at least one removable and replaceable filter element through which air is directed, during use; and
(d) a pulse jet cleaning arrangement (154) constructed and arranged to selectively direct a pulse jet of air, in a reverse direction, through said first filter, during use.

## Patentansprüche

1. Filter **gekennzeichnet durch**:
(a) eine Rahmenkonstruktion (506) mit einem ersten Rahmen (510, 710) und einem zweiten Rahmen (511, 711);
(b) erste und zweite Plattensegmente (502, 504) mit zwischen dem ersten und dem zweiten Rahmen (510, 511) eingesetzten Filtermedia; wobei
(1) das erste Plattensegment (502) ein erstes Ende (532) und ein zweites Ende (536) besitzt, und das zweite Plattensegment (504) ein drittes Ende (534) und ein viertes Ende (538) besitzt; wobei
(A) zwischen dem ersten Ende (532) und dem dritten Ende (534) ein erster Abstand besteht;
(B) zwischen dem zweiten Ende (536) und dem vierten Ende (538) ein zweiter Abstand besteht, und der zweite Abstand grösser als der erste Abstand ist;
(2) das erste Plattensegment (502) und das zweite Plattensegment (504) und der zweite Rahmen (511) eine Strömungsöffnung (100) bilden;
(c) eine Dichtungsanordnung (543), die die Strömungsöffnung (100) umgibt, und von dem zweiten Rahmen (511) auswärts ragt; wobei
(1) die Dichtungsanordnung (543) eine erste Dicke (T7) besitzt; und
(d) einen Anschlag (548), der von dem zweiten Ende (536) auswärts ragt, und eine zweite Dicke (T8) besitzt, die geringer ist als die erste Dicke (T7).

2. Filter nach Anspruch 1 **dadurch gekennzeichnet, dass**:
der erste Rahmen (510) eine erste Aufnahmenut (616) besitzt, die zur Aufnahme eines ersten Verriegelungselementes (614) einer Vorrichtung angeordnet ist, in die der Filter während des Betriebes eingesetzt ist.

3. Filter nach Anspruch 2 **dadurch gekennzeichnet, dass**:
(a) die erste Rahmenkonstruktion (510):
(1) ein Unterteil (510 a);
(2) ein erstes und ein zweites Endteil (510 d, 510 e) als Verlängerung des Unterteiles (510 a); und
(3) ein erstes und ein zweites Seitenteil (510 b, 510c) in Verlängerung des Unterteiles (510 a)
besitzt; und
(b) das erste Endteil (510 e) die erste Aufnahmenut (616) besitzt.

4. Filter nach Anspruch 3 **dadurch gekennzeichnet, dass**:
das erste und das zweite Endteil (510 d, 510 c) und das erste und das zweite Seitenteil (510 b, 510 e) rechtwinkelig zu dem Unterteil (510 a) angeordnet sind.

5. Filter nach einem der Ansprüche 2 oder 3 **dadurch gekennzeichnet, dass**:
der erste Rahmen (510) eine zweite Aufnahmenut (618) besitzt, und die zweite Aufnahmenut (618) gegenüber der ersten Aufnahmenut (616) angeordnet ist.

6. Filter nach Anspruch 5 **dadurch gekennzeichnet, dass**:
das zweite Endteil (510 e) des ersten Rahmens (510) die zweite Aufnahmenut (618) besitzt.

7. Filter nach Anspruch 1 **dadurch gekennzeichnet, dass**:
die erste Aufnahmenut (616) U-förmig ist und zwei Seitenwände besitzt.

8. Filter nach Anspruch 1 **dadurch gekennzeichnet, dass**:
die erste Dichtungsanordnung (543) einen ersten Dichtring (544) besitzt.

9. Filter nach Anspruch 5 **dadurch gekennzeichnet, dass**:
die zweite Aufnahmenut (618) U-förmig ist und zwei Seitenwände besitzt.

10. Filter nach Anspruch 2 **dadurch gekennzeichnet, dass**:
der erste Rahmen (510) eine zweite Verriegelungsnut (618) besitzt, die zur Aufnahme eines zweiten Verriegelungselemtes (617) der Vorrichtung angeordnet ist, in die der Filter für den Betrieb eingesetzt wird.

11. Filter nach Anspruch 1 **dadurch gekennzeichnet, dass** der zweite Rahmen (711) eine dritte Verriegelungsnut (730) besitzt.

12. Filter nach Anspruch 11 **dadurch gekennzeichnet, dass**:
der zweite Rahmen (711) eine vierte Verriegelungsnut (nicht dargestellt) besitzt.

13. Filter nach Anspruch 12 **dadurch gekennzeichnet, dass**:
(a) der zweite Rahmen (711):
(1) ein Oberteil (711 a)
(2) ein erstes Endteil (711 d) und ein zweites Endteil (nicht dargestellt) als Verlängerung des Oberteiles (711 a); und
(3) ein erstes Seitenteil (711 b) und ein zweites Seitenteil )nicht dargestellt) als Verlängerung des Oberteiles (711 a)
besitzt
(b) das erste Endteil (711 d) die dritte Verriegelungsnut (730) besitzt.

14. Filter nach Anspruch 13 **dadurch gekennzeichnet, dass**:
das zweite Endteil (nicht dargestellt) die vierte Verriegelungsnut (nicht dargestellt) besitzt.

15. Filter nach Anspruch 1 **dadurch gekennzeichnet, dass**:
der Anschlag (548) ein harter aus Metall bestehender Anschlag ist.

16. Filter nach Anspruch 15 **dadurch gekennzeichnet, dass**:
das Metall Stahl enthält.

17. Filter nach Anspruch 1 **dadurch gekennzeichnet, dass**:
die zweite Dicke (T 8) mindestens 2,5 mm (0,1 inch) beträgt.

18. Filter nach Anspruch 1 **dadurch gekennzeichnet, dass**
die erste Dicke (T 7) mindestens 10,16 mm (0,4 inch) beträgt.

19. Filter nach Anspruch 1 **dadurch gekennzeichnet, dass**:
die erste Dicke (T 7) mindestens ungefähr 2,5 bis 7,6 mm (0,1 inch bis 0,3 inch) grösser ist als die zweite Dicke (T 8).

20. Filter nach Anspruch 1 **dadurch gekennzeichnet, dass**:
die Dichtung (543) Polyurethan enthält.

21. Filtervorrichtung (1) **gekennzeichnet durch**:
(a) ein Gehäuse, das eine erste Kammer (21) und eine zweite Kammer (22) bildet;
(b) eine erste Luftreinigungsstufe (24), die in der ersten Kammer (21) angeordnet ist, wobei:
(1) die erste Luftreinigungsstufe (24) mindestens einen ersten Filter gemäss Anspruch 2 besitzt, **durch** den während des Betriebes zu filternde Luft geleitet wird;
(c) eine zweite Luftreinigungsstufe (25) die in der zweiten Kammer (22) angeordnet ist, wobei:
(1) die zweite Luftreinigungsstufe (25) mindestens ein ausbaubares und ersetzbares Filterelement besitzt, **durch** das während des Betriebes zu filternde Luft geleitet wird; und
(d) eine Druckstrahl-Reinigungsvorrichtung (154), die so konstruiert und angeordnet ist, dass sie während des Betriebes einen gepulsten Druckluftstrahl in Rückspülrichtung **durch** den ersten Filter blasen kann.

## Revendications

1. Un filtre, comprenant :
(a) une construction formant cadre (506), comprenant une première structure de cadre (510) et une deuxième structure de cadre (511) ;
(b) des première et deuxième sections de panneaux (502,504), incluant des milieux filtrants montés en extension entre lesdites première et deuxième structures de cadre ;
(i) ladite première section de panneau (502) ayant des première et deuxième extrémités (532,536), et ladite deuxième section de panneau (57) ayant des troisième et quatrième extrémités (534,536) ;
(A) lesdites première et troisième extrémités ayant entre elles une première distance ;
(B) lesdites deuxième et quatrième extrémités ayant entre elles une deuxième distance, ladite deuxième distance étant supérieure à ladite première distance ;
(ii) lesdites première et deuxième sections de panneau et ladite deuxième structure de cadre définissant une ouverture d'écoulement d'air ;
(c) un agencement d'étanchéité (543), circonscrivant ladite ouverture d'écoulement d'air (100) se projetant depuis l'extérieur depuis ladite deuxième structure de cadre ;
(i) ledit agencement d'étanchéité ayant une première épaisseur (T7), et
(d) un agencement de paquet (548) faisant saillie vers l'extérieur depuis ladite deuxième extrémité et ayant une deuxième épaisseur (T8) inférieure à la première épaisseur (T7).

2. Un filtre selon la revendication 1, comprenant en outre le fait que :
ladite première structure de cadre définit une première entaille réceptrice (516), orientée pour recevoir un premier organe de verrouillage (614) sur un ensemble dans lequel le filtre est monté en utilisation.

3. Un filtre selon la revendication 2, dans lequel :
(a) ladite première structure de cadre (510) comprend :
(i) une partie inférieure (510a) ;
(ii) des première et deuxième parties d'extrémités (510d,510c) en extension depuis ladite partie inférieure ; et
(iii)des première et deuxième parties latérales (510b,510c) en extension depuis ladite partie de fond ; et
(b) ladite première partie d'extrémité définissant ladite première entaille réceptrice (616).

4. Un filtre selon la revendication 3, dans lequel :
lesdites première et deuxième parties d'extrémité et lesdites première et deuxième parties latérales sont perpendiculaires à ladite partie de fond.

5. Un filtre selon la revendication 2 ou 3, dans lequel :
ladite première structure de cadre définit une deuxième entaille réceptrice (618), ladite deuxième entaille réceptrice étant opposée à ladite première entaille réceptrice.

6. Un filtre selon la revendication 5, dans lequel :
ladite deuxième partie d'extrémité sur ladite première structure de cadre définit ladite deuxième entaille réceptrice.

7. Un filtre selon la revendication 1, dans lequel :
ladite première entaille réceptrice est en forme de U, avec deux branches.

8. Un filtre selon la revendication 1, dans lequel :
ledit premier agencement d'étanchéité comprend un premier joint.

9. Un filtre selon la revendication 5, dans lequel :
ladite deuxième entaille réceptrice est en forme de U avec deux branches.

10. Un filtre selon la revendication 2, comprenant en outre le fait que :
ladite première structure de cadre définit une deuxième entaille réceptrice, orientée pour recevoir un deuxième organe de verrouillage de l'ensemble dans lequel le filtre est monté en utilisation.

11. Un filtre selon la revendication 1, comprenant en outre le fait que :
ladite deuxième structure de cadre définit une troisième entaille réceptrice.

12. Un filtre selon la revendication 11, comprenant en outre le fait que :
ladite deuxième structure de cadre définit une quatrième entaille réceptrice.

13. Un filtre selon la revendication 12, dans lequel :
(a) ladite deuxième structure de cadre (711) comprend :
(i) une partie supérieure (711a) ;
(ii) des première et deuxième parties d'extrémités (711d), en extension depuis ladite partie supérieure ; et
(iii) des première et deuxième parties latérales (711b), en extension depuis ladite partie supérieure ;
(b) ladite première partie d'extrémité définissant ladite troisième entaille réceptrice (30).

14. Un filtre selon la revendication 13, dans lequel :
ladite deuxième partie d'extrémité définit ladite quatrième entaille réceptrice.

15. Un filtre selon la revendication 1, dans lequel :
l'agencement de butée comprend un agencement de butée rigide (548) composé de métal.

16. Un filtre selon la revendication 15, dans lequel :
ledit métal comprend l'acier.

17. Un filtre selon la revendication 1, dans lequel :
ladite deuxième épaisseur (T8) est d'au moins 2,5 mm (0,1 pouce).

18. Un filtre selon la revendication 1, dans lequel :
ladite première épaisseur (T7) est d'au moins 10,16 mm (0,4 pouce).

19. Un filtre selon la revendication 1, dans lequel :
ladite première épaisseur (T7) est d'au moins environ 2,5 à 7,6 mm (0,1 pouce à 0,3 pouce), supérieure à ladite deuxième épaisseur (T8).

20. Un filtre selon la revendication 1; dans lequel :
ledit agencement d'étanchéité comprend du polyuréthane.

21. Un ensemble de filtre (1) comprenant :
(a) un boîtier définissant une première chambre (21) et une deuxième chambre (22) ;
(b) un filtre à air de premier étage (24) positionné dans la première chambre :
(i) ledit filtre à air de premier étage comprenant un premier filtre selon la revendication 2, à travers lequel de l'air à filtrer est dirigé en utilisation ;
(c) un filtre à air de deuxième étage (25) positionné dans la deuxième chambre ;
(i) ledit filtre à air de deuxième étage incluant au moins une élément filtrant amovible et remplaçable, par lequel de l'air est dirigé, en utilisation ; et
(d) un agencement de nettoyage à jet pulsé (154), construit et agencé pour diriger sélectivement un jet d'air pulsé, en direction inverse, à travers ledit premier filtre, en utilisation.
